# EUROPEAN PATENT APPLICATION

(11) **EP 2 154 900 A1**
(43) Date of publication of application: **17.02.2010**
(21) Application number: 08738504.3
(22) Date of filing: 07.04.2008
(51) Int. Cl.: H04N 7/26, H04N 5/93

(54) **DYNAMIC IMAGE DECODING METHOD, DYNAMIC IMAGE DECODING DEVICE, AND ELECTRONIC APPARATUS**

(30) Priority: 13.04.2007 JP 2007105633
(71) Applicant: Panasonic Corporation, Kadoma-shi Osaka 571-8501 (JP)
(72) Inventor: YASUDA, Makoto, Chuo-ku, Osaka 540-6207 (JP)
(74) Representative: Grünecker, Kinkeldey, Stockmair & Schwanhäusser Anwaltssozietät
(86) International application number: PCT/JP2008/000892
(87) International publication number: WO 2008/132774

(57) **Abstract**

A motion picture decoding device for decoding encoded motion pictures on a plurality of channels and synthesizing and reproducing the resultant images on the same screen, includes a decoder (511a, 511b) configured to decode an encoded motion picture on each channel, frame memories (520a, 520b) configured to store decoded frame image data, and a controller (151) configured to control these components. The controller (151), when a predetermined special playback mode is designated, performs a process, excluding, from display targets, frames having an evaluation index larger than or equal to a predetermined threshold, based on structure information, the evaluation index being based on a difference in a required-for-decoding number of frames between each channel.

## Description

### TECHNICAL FIELD

The present invention relates to a technique of decoding and reproducing an encoded motion picture, and more particularly, to a technique of simultaneously reproducing a plurality of motion pictures.

### BACKGROUND ART

In recent years, digital technologies have been extensively put into practical use, which allow motion pictures to be recorded into or reproduced from a device, such as a recording and reproduction apparatus, a personal computer, a home server or the like, or to be transferred over a long distance using a communication network, such as the Internet or the like. A digital mobile communication apparatus, such as a mobile telephone or the like, is also allowed to have means for taking a motion picture at a local site and immediately sending the motion picture to others. Also, in the field of broadcasting, a transmission and encoding method employing digital technology is employed in a television or the like.

Among them, an optical disc, such as a Blu-ray disc or an HD-DVD, which stores higher-definition images, can accommodate a larger amount of digital motion picture data than that of a conventional Video CD or DVD, and can store a high-quality reproduced image, and in addition, supports a Picture-in-Picture (hereinafter simply referred to as PinP) function, which simultaneously reproduces two bit streams and displays two pictures on the same screen. PinP can be used to simultaneously display two streams which are obtained from multiple angles, e.g., simultaneously display a pitcher and a batter whose images are transferred as separate bit streams in a recorded baseball game.

This PinP reproduction requires reproduction of two bit streams in synchronization with each other. Conventionally, there is a known motion picture decoding device which synthesizes two bit streams which have been separately decoded to obtain a reproduced image (see, for example, Patent Document 1).

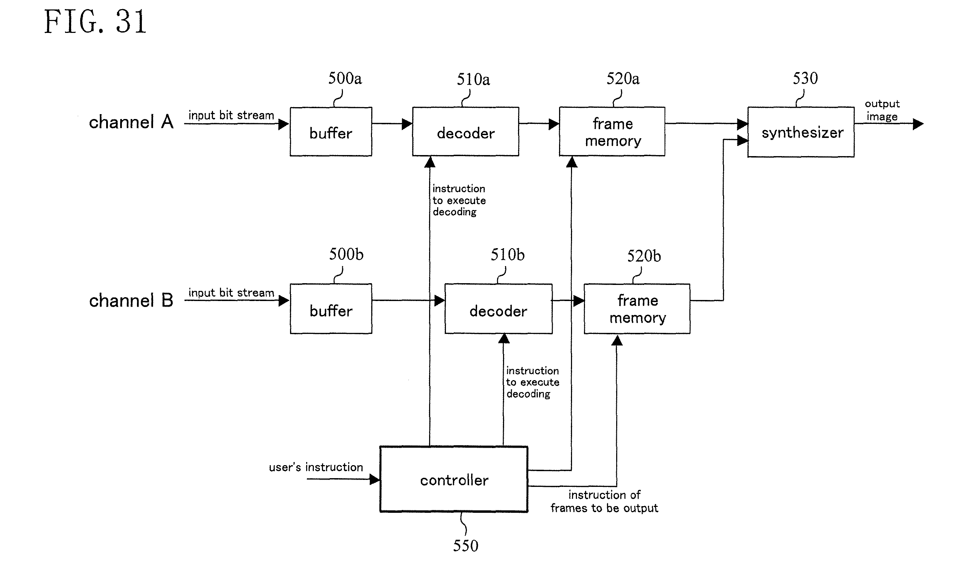

Hereinafter, a motion picture decoding method used in the conventional device will be described with reference to FIGS. 31 to 34.

FIG. 31 is a block diagram showing an example configuration of the conventional motion picture decoding device. In FIG. 31, reference symbols 500a and 500b indicate buffers for accumulating bit streams on respective channels, reference symbols 510a and 510b indicate decoders, reference symbol 550 indicates a controller, reference symbols 520a and 520b indicate frame memories, and reference symbol 530 indicates a synthesizer. Here, the lower-case suffix letters a and b added to the reference symbols indicate that the elements indicated by the reference symbols are for a channel A and a channel B, respectively. This applies to the description which follows unless otherwise specified.

Initially, bit streams of motion pictures on the two channels A and B are input to the respective buffers 500a and 500b before being decoded by the following respective decoders 510a and 510b, and the restored images are stored into the respective frame memories 520a and 520b. Here, decoding is performed using a method conforming to "Information Technology Generic Coding of Moving Pictures and Associated Audio Information", which is usually called MPEG2 (Motion Picture Experts Group Phase 2), which is an international standard.

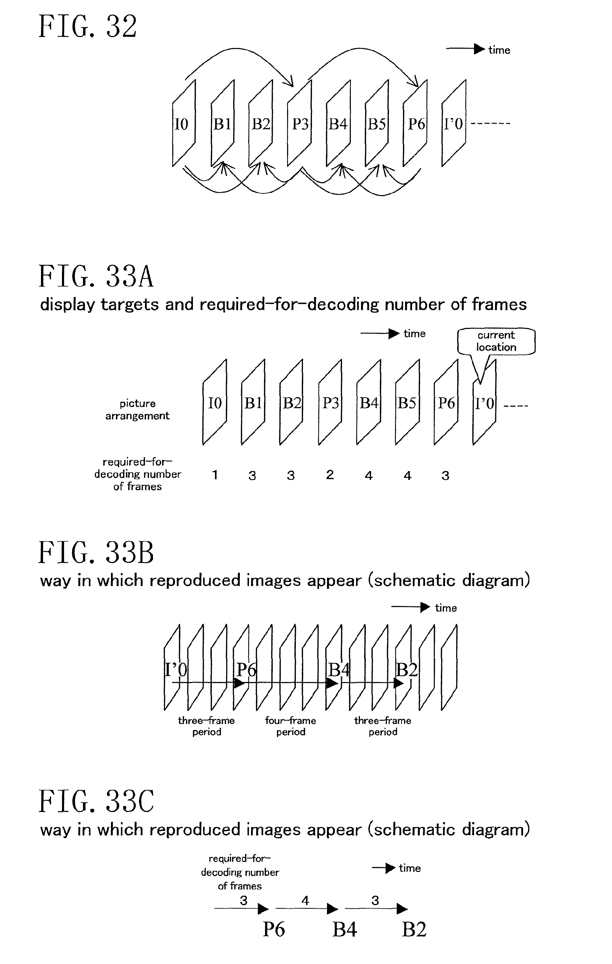

Here, an overview of an image encoding method conforming to the MPEG2 standard will be described. Referring to FIG. 32, a series of images includes three kinds of frames: an I-frame (Intra-coded frame) which can be completely decoded using only data of itself; a P-frame (Predictive-coded frame) which is decoded using another single frame (I- or P-frame); and a B-frame (Bi-Directionally Predictive-coded frame) which is decoded using a maximum of two other frames (I- or P-frames). Typically, these frames are provided in a regular pattern. The frames are typically transmitted in units of a GOP (Group Of Pictures), which is a group of frames within a time length of about 0.5 to 1 sec.

In the case of FIG. 32, the frames are decoded in the order of 10, P3, B1, B2, P6, B4, B5 and so on. Here, the frame 10 is required for production of the frame P3, and the frames I0 and P3 are required for production of the frame B1 or B2. Therefore, I- and P-frames need to be saved in an image memory so as to produce subsequent image frames even after being displayed. A frame which is required for reproduction of another image frame is referred to as a reference frame. In other words, in order to reproduce P- and B-frames, it is essential to decode their reference frames.

Decoded I-, P- and B-frames are stored in the frame memories 520a and 520b. The stored frames are output from the frame memories 520a and 520b in an order which is specified by the controller 550 so as to obtain reproduced images in an appropriate display order. These resultant images are synthesized and output as a PinP image on the same screen by the synthesizer 530.

Next, operation during special playback will be described. The special playback refers to playback modes other than normal playback in which images are decoded and reproduced on a frame-by-frame basis in a forward direction from the past to the future on a time axis as described above. Examples of the special playback include fast-forward playback in which images are non-consecutively selected and reproduced in the forward direction, slow playback in which reproduction is performed in the forward direction at a speed lower than the normal speed, and reverse playback, such as fast-reverse playback in which images are non-consecutively selected and reproduced in the backward direction, reverse slow playback in which reproduction is performed in the backward direction at a speed lower than the normal speed and the like. Most recent motion picture decoding devices have special playback functions for the purpose of user's convenience.

Hereinafter, as an example of the special playback, operation during reverse slow playback will be described with reference to FIG. 33. Although one of the channels (channel A) is described below, reproduction can also be similarly performed for the other channel B. Resultant images can be synthesized to obtain reproduced images which go back in time in PinP.

Referring to FIG. 33(A), it is assumed that a currently displayed image is a frame I'0, and images are displayed during reverse slow playback in the order of P6 (immediately before I'0), B4, B2 and I0 (the other images are skipped). In order to obtain an image to be displayed, the controller 550 controls the decoder 510a so that a bit stream containing a GOP including the frames is transferred to the buffer 500a, and then decoding is continued until a frame to be displayed (hereinafter referred to as a display target) is obtained.

Specifically, when the frame P6 is a display target, since images of I0 and P3 are required for decoding of P6, I0 and P3 are decoded before P6 is decoded. During this period of time, I'0 continues to be displayed. After P6 is decoded, the controller 550 eventually controls the frame memory 520a so that the reproduced image of P6 is output. In other words, the controller 550 controls the frame memory 520a so that the currently displayed frame is changed to P6. Next, when B4 is a display target, similarly a bit stream containing its GOP is transferred and the controller 550 controls the decoder 510a and the frame memory 520a so that I0, P3 and P6 are decoded before B4 is decoded and displayed. Next, when B2 is a display target, similar operation is performed. When the head frame of the GOP is a display target, a GOP immediately before the current GOP in time is newly transferred and the final frame is set as a display target, thereby continuing reverse slow playback.

FIG. 33(B) shows an example way in which reproduced images appear in this case. When a decoder has a decoding capability corresponding to the normal speed, decoding of one frame takes a maximum of one frame display period. The number of frames required for decoding of the frame P6 initially displayed as a reverse slow image is three (I0, P3 and the final result P6). Specifically, the frame I'0 continues to be displayed for a three-frame period before P6 is displayed. Since decoding of the next B4 requires decoding of four frames I0, P3, P6 and B4 in this stated order, P6 continues to be displayed for a four-frame period before B4 is displayed. Similarly, since decoding of B2 requires decoding of three frames I0, P3 and B2 in this stated order, B4 continues to be displayed for a three-frame period before B2 is displayed.

Here, the reason why it is not necessary to decode B1 is that the frame B2 does not require reference to the other B-frames. Actually, a bit stream of B1 may be only read and discarded, which typically takes a sufficiently short period of time. Therefore, a period of time required to read and discard a B-frame is negligible as compared to a period of time required to decode the B-frame.

FIG. 33(C) is a diagram schematically showing a way in which images appear during reverse slow playback. In FIG. 33(C), a period of time during which an image continues to be displayed is represented by the length of an arrow. Note that, in FIG. 33(C), the number of frames required for decoding of a frame to be displayed is described as "the required-for-decoding number of frames."
Patent Document 1: Japanese Unexamined Patent Application Publication No. 2007-37068

### DISCLOSURE OF THE INVENTION

### PROBLEMS TO BE SOLVED BY THE INVENTION

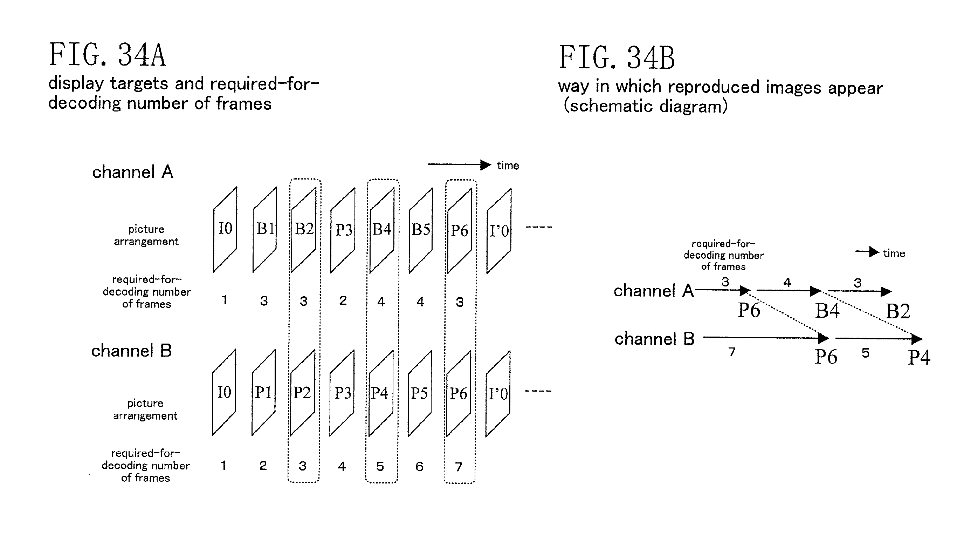

However, in the aforementioned conventional configuration, during the special playback, particularly during reverse slow playback as an example thereof, a screen updating time may vary between channels since a stream structure, an image size, an encoding standard, the code amount of each image or the like varies between channels. Therefore, although images at the same time should be displayed, images at different times may be synthesized, so that an awkward and unnatural image is reproduced, which is a problem. This problem will be described with reference to FIG. 34.

FIG. 34(A) shows an example distribution of encoding types of bit streams on two channels. Note that information about the number of frames included in a GOP of a bit stream, the encoding types or order of images in a GOP, or the like is important to a decoding process, and is collectively referred to as a structure. In FIG. 34(A), it is assumed that a channel A has a distribution of encoding types similar to that of FIG. 33, while a channel B has a distribution different from that of FIG. 33, in which no B-frame is included. In FIG. 34(A), the required-for-decoding number of frames is also shown for each frame when the frame is a display target.

In this case, a way in which images appear during reverse slow playback is shown in FIG. 34(B). As shown in FIG. 34(B), the required-for-decoding number of frames is three for P6 on the channel A, and reproduction of the P6 takes a three-frame period. On the other hand, the required-for-decoding number of frames is seven for P6 on the channel B and reproduction of the P6 takes a seven-frame period. Therefore, a time difference (i.e., four frame periods) corresponding to the difference in the required-for-decoding number of frames occurs for reproduction. Thus, the screen updating time significantly varies between channels. Therefore, a PinP image obtained by synthesizing frames on the channels A and B is a result of synthesis of images at different times, although images at the same time should be displayed, so that an awkward and unnatural image is reproduced.

Also, when there is a difference in image size of a bit stream between channels, the screen updating time is more likely to vary between channels. For example, when one of two channels has the HD size (high-definition television size: 1920 pixels × 1080 pixels) and the other has the SD size (standard television size: 720 pixels × 480 pixels), an HD-size image contains pixels the number of which is six times as many as that of an SD-size image, and therefore, tends to take a longer decoding period of time than that of the SD-size image. Therefore, the screen updating time is likely to vary between the two channels.

Moreover, when bit streams on channels are of different standards, the screen updating time is more likely to vary between the channels. For example, it is assumed that one of two channels is of the MPEG2 standard and the other is of the H.264 standard, which is also an international standard. Since the H.264 standard is an encoding standard which was established after MPEG2 and provides higher efficiency by utilizing various new techniques and the predictive technique, H.264 requires a larger amount of calculation process than that of MPEG2 during decoding, and therefore, tends to take a longer decoding period of time than that of MPEG2. Therefore, the screen updating time is more likely to vary between the two channels.

Moreover, when the code amount of an image in a bit stream varies between channels, the screen updating time is still more likely to vary between the channels. For example, when an image has a size of 100 kbytes on one of two channels and an image has a size of 500 kbytes on the other channel, the latter channel has a larger amount of codes to be processed and takes a longer decoding period of time. Therefore, the screen updating time is likely to vary between the two channels.

The present invention is proposed in view of the aforementioned conventional problems. An object of the present invention is to provide motion picture decoding for synthesizing motion pictures on a plurality of channels and reproducing the resultant image on the same screen, in which the screen updating time is prevented from significantly vary between the channels, resulting in a more natural reproduced image.

### SOLUTION TO THE PROBLEMS

The present invention provides motion picture decoding for decoding an encoded motion picture on each of a plurality of channels and synthesizing and reproducing the motion pictures on the same screen, including the steps of obtaining structure information of the encoded motion picture on each channel, determining display targets to be reproduced, the display targets being frames at the same time on the channels, based on the structure information, when a predetermined special playback mode is designated, and decoding the display targets. In the display target determining step, frames at the same time on the channels having an evaluation index larger than or equal to a predetermined threshold are excluded from the display targets, the evaluation index being based on a difference in a required-for-decoding number of frames between each channel, the required-for-decoding number of frames being the number of frames required for decoding and being calculated based on the structure information.

According to the present invention, frames having the evaluation index based on the required-for-decoding number of frames larger than or equal to the predetermined threshold are excluded from display targets. As a result, frames having a large difference in the required-for-decoding number of frames which are responsible for variations in screen updating time between channels are not set as display targets. Therefore, it is possible to prevent updating of a screen from significantly varying between channels, resulting in a more natural reproduced image.

Also, in the present invention, instead of the evaluation index based on the difference in the required-for-decoding number of frames between each channel, an evaluation index based on a difference in the required-for-decoding amount of codes between each channel, or an evaluation index based on a difference in a required-for-decoding time period between each channel may be used.

Also, the present invention provides motion picture decoding for decoding an encoded motion picture on each of a plurality of channels and synthesizing and reproducing the motion pictures on the same screen, including the steps of obtaining structure information of the encoded motion picture on each channel, determining display targets to be reproduced, the display targets being frames at the same time on the channels, when a predetermined special playback mode is designated, determining a delayed channel for the display targets, the delayed channel being a channel for which it is predicted that decoding of the corresponding display target will be last completed, and decoding the display targets, and after the frame on the delayed channel is completely decoded, synthesizing and reproducing the decoded image data on the channels at the same timing. In the delayed channel determining step, of frames as the display targets, a frame having a largest required-for-decoding number of frames is obtained, the required-for-decoding number of frames being the number of frames required for decoding and being obtained based on the structure information, and the channel of the frame having the largest required-for-decoding number of frames is determined as the delayed channel.

According to the present invention, for display targets, a channel having a largest required-for-decoding number of frames is determined as a delayed channel, and reproduction of each channel waits until the frame on the delayed channel is completely decoded. As a result, it is possible to prevent the screen updating time from varying between channels, resulting in a more natural reproduced image.

Also, in the present invention, a channel having a largest required-for-decoding amount of codes may be determined as the delayed channel, or a channel having a longest required-for-decoding time period may be determined as the delayed channel.

### EFFECT OF THE INVENTION

According to the present invention, when encoded motion pictures on a plurality of channels are decoded, and are synthesized and reproduced on the same screen, delayed channel.

### BRIEF DESCRIPTION OF THE DRAWINGS

FIG. 1 is a diagram showing a configuration of a motion picture decoding device according to Embodiment 1 of the present invention.
FIG. 2(A) is a schematic diagram showing example structures of bit streams on two channels. FIG. 2(B) is a schematic diagram showing a way in which reproduced images appear in Embodiment 1.
FIG. 3(A) is a diagram showing a control flow of basic operation of a controller of Embodiment 1. FIG. 3(B) is a diagram showing a detailed flow of a display target determining process of FIG. 3(A).
FIG. 4(A) is a diagram showing a detailed flow of a special playback process of FIG. 3(A).
FIG. 4(B) is a diagram showing a detailed flow of a normal playback process of FIG. 3(A).
FIG. 5 is a diagram showing a configuration of a motion picture decoding device according to Embodiment 2 of the present invention.
FIG. 6(A) is a diagram showing a control flow of basic operation of a controller of Embodiment 2. FIG. 6(B) shows a detailed flow of a display target determining process of FIG. 6(A).
FIG. 7(A) is a diagram showing a detailed flow of a special playback process of FIG. 6(A). FIG. 7(B) is a diagram showing a detailed flow of a normal playback process of FIG. 6(A).
FIG. 8 is a diagram showing a configuration of a motion picture decoding device according to Embodiment 3 of the present invention.
FIG. 9(A) is a diagram showing a control flow of basic operation of a controller of Embodiment 3. FIG. 9(B) shows a detailed flow of a display target determining process of FIG. 9(A).
FIG. 10(A) shows a detailed flow of a special playback process of FIG. 9(A). FIG. 10(B) is a diagram showing a detailed flow of a normal playback process of FIG. 9(A).
FIG. 11 is a diagram showing a configuration of a motion picture decoding device according to Embodiment 4 of the present invention.
FIG. 12(A) is a diagram showing a control flow of basic operation of a controller of Embodiment 4. FIG. 12(B) is a diagram showing a detailed flow of a display target determining process of FIG. 12(A).
FIG. 13(A) is a diagram showing a detailed flow of a special playback process of FIG. 12(A). FIG. 13(B) is a diagram showing a detailed flow of a normal playback process of FIG. 12(A).
FIG. 14 is a diagram showing a configuration of a motion picture decoding device according to Embodiment 5 of the present invention.
FIG. 15(A) is a diagram showing a control flow of basic operation of a controller of Embodiment 5. FIG. 15(B) is a diagram showing a detailed flow of a display target determining process of FIG. 15(A).
FIG. 16(A) is a diagram showing a detailed flow of a special playback process of FIG. 15(A). FIG. 16(B) is a diagram showing a detailed flow of a normal playback process of FIG. 15(A).
FIG. 17 is a diagram showing a configuration of a motion picture decoding device according to Embodiment 6 of the present invention.
FIG. 18 is a schematic diagram showing an example way in which reproduced images appear in this embodiment.
FIG. 19(A) is a diagram showing a control flow of basic operation of a controller of Embodiment 6. FIG. 19(B) is a diagram showing a detailed flow of a delayed channel determining process of FIG. 19(A).
FIG. 20 is a diagram showing a detailed flow of a special playback process of FIG. 19(A).
FIG. 21 is a diagram showing a configuration of a motion picture decoding device according to Embodiment 7 of the present invention.
FIG. 22(A) is a diagram showing a control flow of basic operation of a controller of Embodiment 7. FIG. 22(B) is a diagram showing a detailed flow of a display target determining process of FIG. 22(A).
FIG. 23 is a diagram showing a detailed flow of a special playback process of FIG. 22(A).
FIG. 24 is a diagram showing a configuration of a motion picture decoding device according to Embodiment 8 of the present invention.
FIG. 25(A) is a schematic diagram showing an example way in which reproduced images appear. FIGS. 25(B) and 25(C) are diagrams showing a time-division decoding process of Embodiment 8.
FIG. 26 is a diagram showing a control flow of basic operation of a controller of Embodiment 8.
FIG. 27 is a diagram showing a detailed flow of a special playback process of FIG. 26.
FIG. 28 is a block diagram showing an example configuration of an electronic apparatus including the motion picture decoding device of the present invention.
FIG. 29 is an external view of an optical disc reproducing apparatus as an example electronic apparatus.
FIG. 30 is a block diagram showing an example configuration of an electronic apparatus having the motion picture decoding device of the present invention.
FIG. 31 is a block diagram showing an example configuration of a conventional motion picture decoding device.
FIG. 32 is a diagram showing an example GOP arrangement.
FIG. 33(A) is a diagram showing an example picture arrangement. FIGS. 33(B) and 33(C) are diagrams showing a way in which reproduced images appear.
FIG. 34(A) is a diagram showing example picture arrangements when there are two channels. FIG. 34(B) is a diagram showing a way in which reproduced images appear.

### DESCRIPTION OF THE REFERENCE CHARACTERS

151, 152, 153, 154, 155, 170, 180, 560 controller
160 time measuring unit
501a,501b buffer memory
511a, 511b, 512a, 512b, 513a, 513b, 515a, 515b, 516 decoder
520a, 520b frame memory
700, 710 switch
C10 bit stream supply unit
C20 motion picture decoding device
C30 image output unit
C 100, C110 electronic apparatus

### BEST MODE FOR CARRYING OUT THE INVENTION

Hereinafter, the best mode for carrying out the present invention will be described with reference to the accompanying drawings.

Note that, in each embodiment described below, reverse slow playback will be described as an example predetermined special playback mode. Note that a technique described in each embodiment is similarly applicable to other special playback, such as fast-forward playback, slow playback, fast-reverse playback and the like.

### (Embodiment 1)

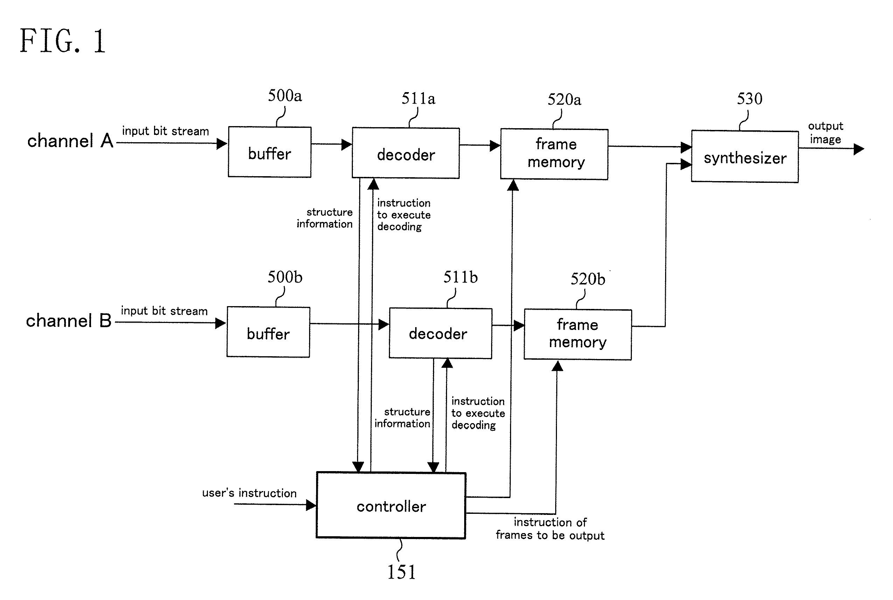

FIG. 1 is a diagram showing a configuration of a motion picture decoding device according to Embodiment 1 of the present invention. In FIG. 1, the same components as those of FIG. 31 are indicated by the same reference symbols. In FIG. 1, reference symbols 511a and 511b indicate decoders, and reference symbol 151 indicates a controller. The processes of the decoders 511a and 511b and the controller 151 are significantly different from those of the configuration of FIG. 31.

Initially, bit streams of motion pictures on two channels A and B are input to buffers (buffer memories) 500a and 500b before being decoded by the following decoders 511a and 511b, respectively. The restored images are stored in frame memories 520a and 520b, respectively. Here, the motion picture decoding device of this embodiment is different from the configuration of FIG. 31 in that the decoders 511a and 511b output structure information about bit streams on the channels A and B, respectively. The decoders 511a and 511b previously analyze the structure information when decoding the bit streams for forward playback. The structure information output from the decoders 511a and 511b is stored in information storing means provided in the controller 151.

As used herein, the term "structure information" refers to information about a structure of a bit stream, i.e., information indicating the number of frame images contained in a GOP of a bit stream, and the encoding types and order of frame images in the GOP.

The images stored in the frame memories 520a and 520b are output in an order specified by the controller 151. The controller 151 specifies an order in which the images are output so as to obtain reproduced images in an appropriate display order. The images output from the frame memories 520a and 520b are synthesized and output as a PinP image on the same screen by a synthesizer 530.

Also, the controller 151, when a reverse slow playback mode is designated as the predetermined special playback mode, determines frames to be reproduced (display targets) based on the structure information received from the decoders 511a and 511b. Specifically, the term "display targets" refers to a group of frames at the same time on channels which are to be reproduced. The controller 151 controls the decoders 511a and 511b so that the decoders 511a and 511b continue to perform decoding until display targets are determined.

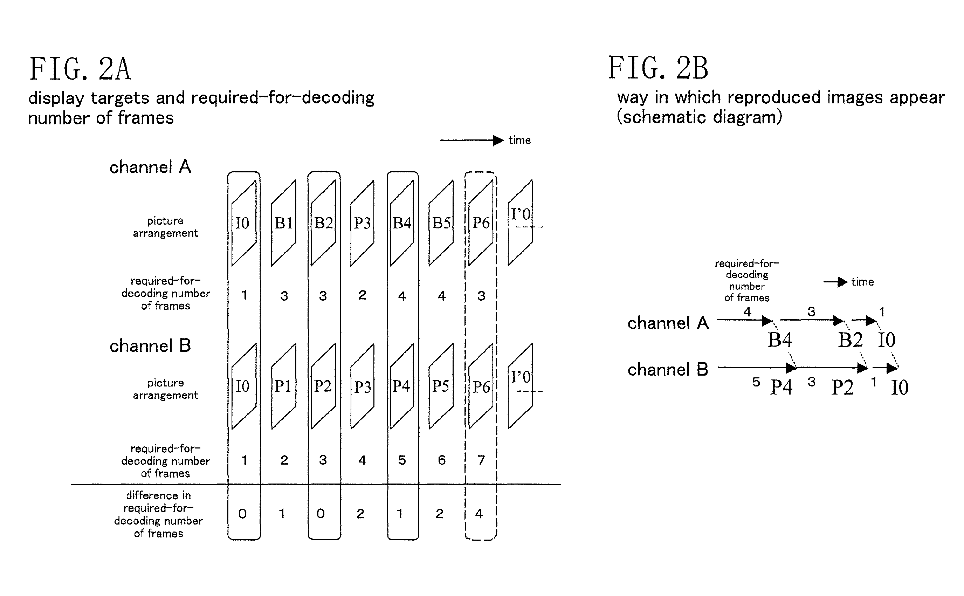

FIG. 2(A) shows example structures of bit streams on the channels A and B. In FIG. 2(A), the channel A has a structure similar to that of FIG. 32, and the channel B has a structure which includes no B-frame as is different from that of FIG. 32. In FIG. 2(A), it is assumed that a currently displayed frame is a frame I'0, and reverse slow playback is performed successively from P6 which is located immediately before I'0. It is also assumed that, on the channel A, images are displayed in the order of P6, B4, B2 and I0 during the reverse slow playback. It is similarly assumed that, on the channel B, images are displayed in the order of P6, P4, P2 and I0.

In order to obtain frames to be displayed, i.e., images of display targets, bit streams of GOPs containing the display targets need to be transferred to the buffers 500a and 500b, and the decoders 511a and 511b need to execute decoding until image data of the display targets is obtained. Also, when the display targets have reached the heads of the respective GOPs, GOPs immediately before the current GOPs in time are newly transferred to the buffers 500a and 500b, and reverse slow playback is continued where the final frames thereof are display targets.

In FIG. 2(A), for each frame, the number of frames required for decoding when the frame is a display target (the required-for-decoding number of frames) is shown.

A process performed by the controller 151 to determine display targets during reverse slow playback in this embodiment will be described in detail.

The controller 151 initially determines a frame on each of the channels A and B at a predetermined time as a display target candidate in accordance with the reverse slow playback mode. Thereafter, for the display target candidates, the required-for-decoding numbers of frames are calculated based on the structure information of the channels A and B received from the decoders 511a and 511b, respectively. Moreover, a difference in the calculated required-for-decoding number of frames between the channels A and B is calculated, and the difference is compared with a predetermined threshold (the number of frames). If the difference in the required-for-decoding number of frames is smaller than the predetermined threshold, the display target candidates are determined as display targets. On the other hand, if the difference in the required-for-decoding number of frames is larger than or equal to the predetermined threshold, the display target candidates are canceled, and frames are searched for which are located before the canceled display target candidates in time and whose difference in the required-for-decoding number of frames is smaller than the predetermined threshold, and the frames are determined as display targets.

This process will be described in detail with reference to FIG. 2. Here, it is assumed that the predetermined threshold which is compared with the required-for-decoding number of frames is "2."

Initially, P6 on the channel A and P6 on the channel B are set as display target candidates. As shown in FIG. 2(A), the required-for-decoding number of frames is three for P6 on the channel A and seven for P6 on the channel B. Therefore, their difference in the required-for-decoding number of frames is four, which is larger than the predetermined threshold "2," the display target candidates in this case are canceled.

Next, B5 on the channel A and P5 on the channel B, which are located before P6 on the channel A and P6 on the channel B in time, are set as display target candidates and are evaluated. As shown in FIG. 2(A), the required-for-decoding number of frames is four for B5 on the channel A and six for P5 on the channel B. Therefore, their difference in the required-for-decoding number of frames is two, which is equal to the predetermined threshold "2," the display target candidates in this case are also canceled.

Next, B4 on the channel A and P4 on the channel B, which are located before B5 on the channel A and P5 on the channel B in time, are set as display target candidates and are evaluated. As shown in FIG. 2(A), the required-for-decoding number of frames is four for B4 on the channel A and five for P4 on the channel B. Therefore, their difference in the required-for-decoding number of frames is one, which is smaller than the predetermined threshold "2," the display target candidates in this case are determined as display targets. Specifically, B4 on the channel A and P4 on the channel B are determined as display targets.

The controller 151 controls the decoders 511a and 511b and the frame memories 520a and 520b so that images of B4 on the channel A and P4 on the channel B, which have been determined as display targets, are decoded and output. Although an image of the frame I'0 is initially displayed on a screen, the images of B4 on the channel A and P4 on the channel B are displayed on the screen soon after being reproduced. Thereafter, similarly, display targets are determined and images of the determined display targets are reproduced.

FIG. 2(B) is a schematic diagram showing a way in which reproduced images appear. Here, it is assumed that the decoders 511a and 511b have a decoding capability corresponding to the normal speed.

Note that, in the aforementioned operation, the initial display targets are determined at the third evaluation after the display target candidates are canceled two times. When the number of times of cancellation is large, i.e., when there are some consecutive frames having a large difference in the required-for-decoding number of frames between the channels, the interval between the currently displayed frames and display targets is wide. Note that, for example, the MPEG2 standard has a rule that a GOP invariably contains one or more I-frames. Therefore, in this case, at least an I-frame (the required-for-decoding number of frames is one) is determined as a display target. Therefore, a problem does not arise that no display target is found and therefore updating of a screen is completely stopped.

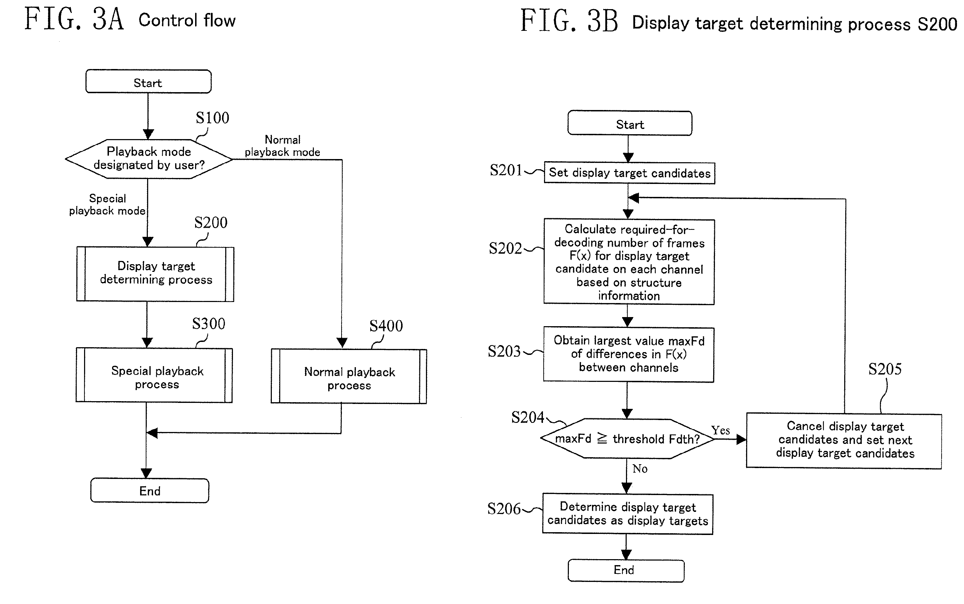

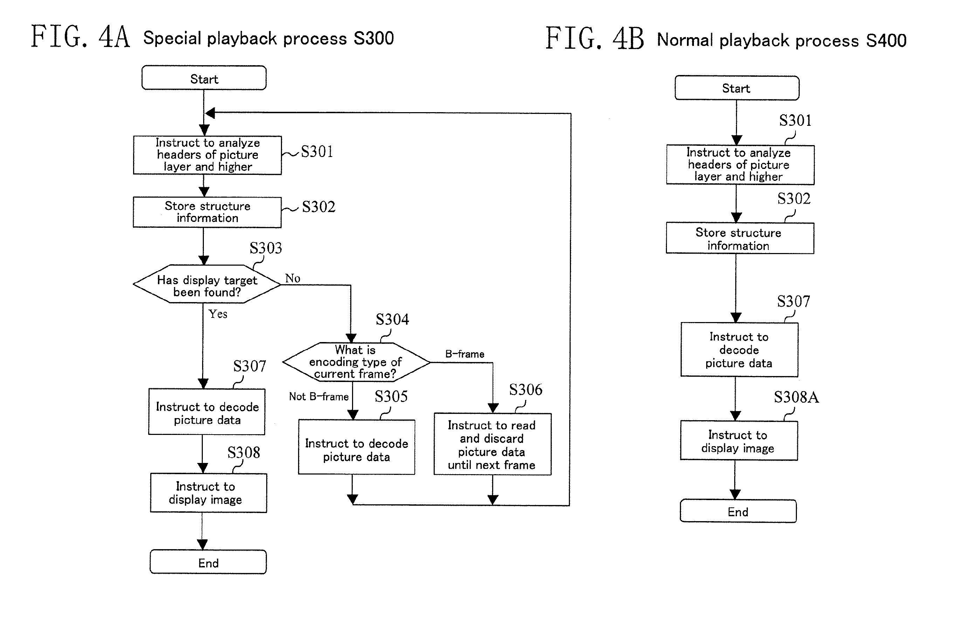

FIGS. 3 and 4 are flowcharts showing specific operation of the controller 151. FIG. 3(A) shows a control flow of basic operation. FIG. 3(B) shows a detailed flow of a display target determining process S200 of FIG. 3(A). FIG. 4(A) shows a detailed flow of a special playback process S300 of FIG. 3(A). FIG. 4(B) shows a detailed flow of a normal playback process S400 of FIG. 3(A). Note that it is here assumed that a plurality of channels including channels A and B are to be processed. Specifically, although the device of FIG. 1 is configured, assuming that the number of channels for motion pictures is two, three or more channels may be provided. This also applies to embodiments described below.

Initially, as shown in FIG. 3(A), a playback mode (e.g., normal playback, special playback, etc.) designated by the user is determined (S100). When the designated playback mode is the normal playback, the normal playback process S400 is performed. When the designated playback mode is the special playback, the display target determining process S200 is performed, followed by the special playback process S300. Note that the controller 151 executes the special playback process S300 and the normal playback process S400 with respect to each channel. Although the following description is given, assuming that the processes are performed with respect to the channel A, the processes are also similarly performed with respect to all the other channels (including the channel B).

In the normal playback process S400, as shown in FIG. 4(B), the controller 151 initially instructs the decoder 511a to analyze the headers of the picture layer and higher of a bit stream (S301), and stores the resultant structure information (S302). Thereafter, the controller 151 instructs the decoder 511a to decode picture data, which is data lower in the hierarchy than the picture layer (S307). When the decoding process has been completed for one frame, the controller 151 instructs the frame memory 520a to display an appropriate image from decoded images so that a correctly rearranged image is displayed (S308A).

In the display target determining process S200, as shown in FIG. 3(B), the controller 151 initially sets display target candidates (S201). Thereafter, the controller 151 calculates the required-for-decoding number of frames F(x) for a display target candidate on each channel based on the structure information (S202), where x represents a channel. Next, a largest value maxFd of the differences in the required-for-decoding number of frames F(x) between all the channels is obtained (S203), and this largest value maxFd is compared with a predetermined threshold Fdth (S204). When the largest value maxFd is smaller than the threshold Fdth, the current display target candidates are determined as display targets (S206), and the process is ended. On the other hand, when the largest value maxFd is larger than or equal to the threshold Fdth, the current display target candidates are canceled, and the next display target candidates are set (S205), and the process is performed from S202 again.

In the display target determining process S200, although the largest value of the differences in the required-for-decoding number of frames is used as an index of evaluation based on the difference in the required-for-decoding number of frames between channels, other values may be used. For example, an average value of the differences between any two channels may be used as the evaluation index. Alternatively, the difference in the required-for-decoding number of frames may be multiplied by a correction coefficient which reflects on encoding conditions.

In the special playback process S300, as shown in FIG. 4(A), the controller 151 initially instructs the decoder 511a to analyze the headers of the picture layer and higher of a bit stream (S301), and stores the resultant structure information (S302). Next, the controller 151 determines whether or not a frame matches a display target (S303), and when the frame matches the display target, instructs the decoding means 511a to decode the picture data (S307), and instructs the frame memory 520a to display the image (S308). On the other hand, when the frame does not match the display target, the encoding type of the frame is determined (S304). When the frame is a B-frame, the controller 151 instructs the decoder 511a to read and discard picture data until the next frame (S306). When the frame is not a B-frame, the controller 151 instructs the decoder 511a to decode the frame (S305).

As described above, in this embodiment, the required-for-decoding number of frames is calculated for a display target candidate on each channel. When an evaluation index based on a difference in the required-for-decoding number of frames is smaller than a predetermined threshold, the display target candidates are determined as display targets, and when otherwise, the display target candidates are canceled. In other words, frames whose evaluation index based on the difference in the required-for-decoding number of frames is larger than or equal to the predetermined threshold are excluded from display targets. As a result, frames having a large difference in the required-for-decoding number of frames which are responsible for variations in screen updating time between channels are not set as display targets. Therefore, it is possible to prevent updating of a screen from significantly varying between channels, resulting in a more natural reproduced image.

### (Embodiment 2)

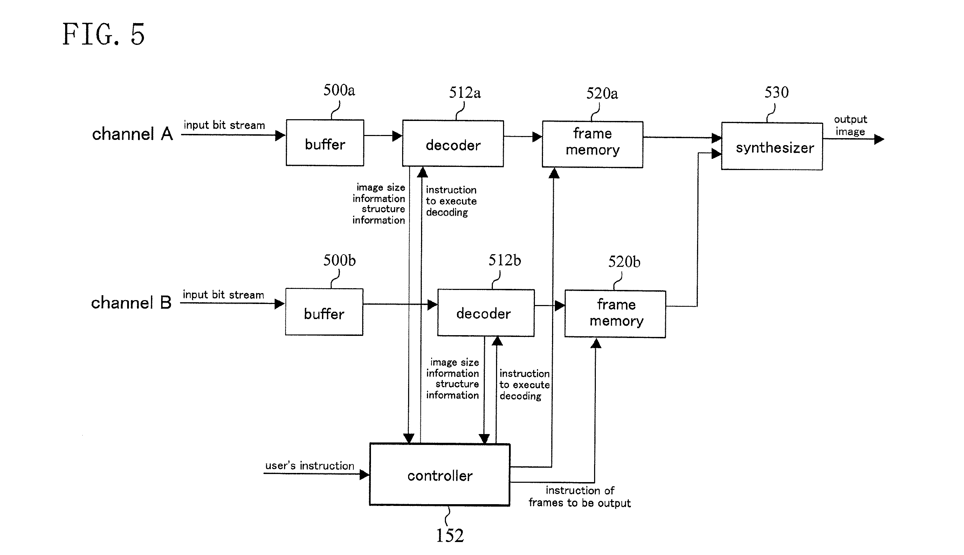

FIG. 5 is a diagram showing a configuration of a motion picture decoding device according to Embodiment 2 of the present invention. In FIG. 5, the same components as those of FIG. 1 are indicated by the same reference symbols and will not be here described in detail. The configuration of FIG. 5 is different from that in FIG. 1 of Embodiment 1 in processes of decoders 512a and 512b and a controller 152.

This embodiment is different from Embodiment 1 in that the decoders 512a and 512b output image size information in addition to the structure information, and the controller 152 determines display targets using the image size information in addition to the structure information. As used herein, the image size information refers to, for example, the number of pixels per frame. The decoders 512a and 512b previously analyze the structure information and the image size information when decoding bit streams for forward playback. The structure information and the image size information output from the decoders 512a and 512b are stored in information storing means provided in the controller 152.

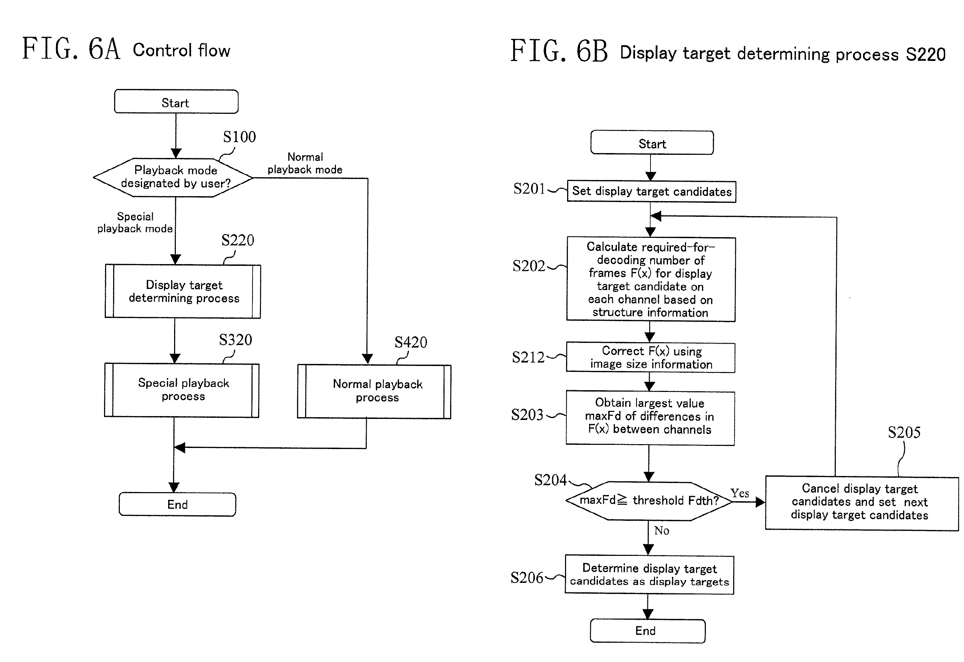

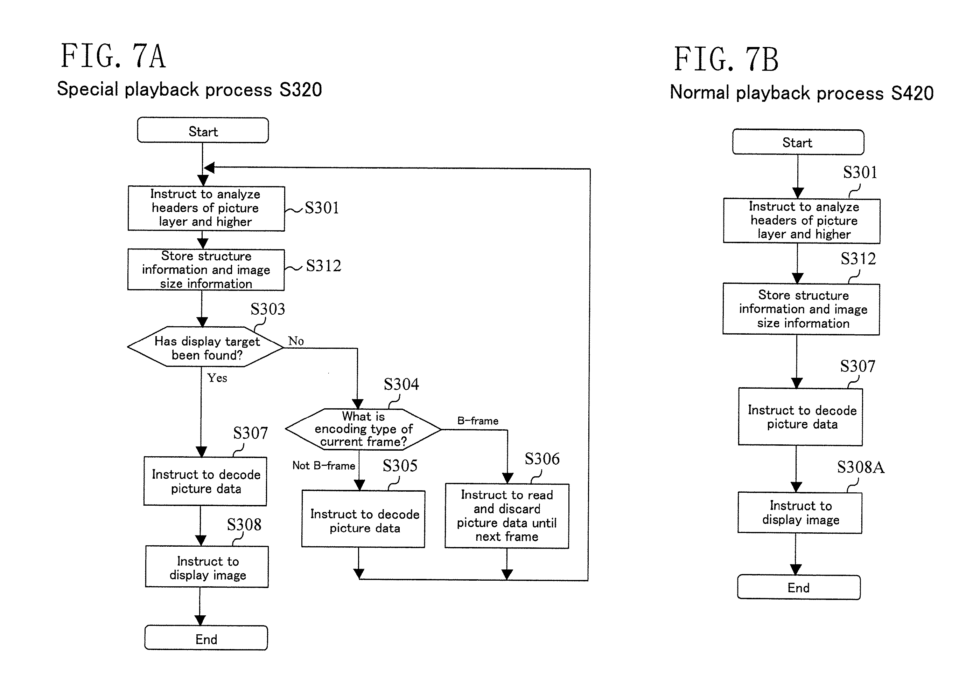

FIGS. 6 and 7 are flowcharts showing specific operation of the controller 152. In FIGS. 6 and 7, the same steps as those shown in FIGS. 3 and 4 of Embodiment 1 are indicated by the same reference symbols and will not be here described in detail. FIG. 6(A) shows a control flow of basic operation. FIG. 6(B) shows a detailed flow of a display target determining process S220 of FIG. 6(A). FIG. 7(A) shows a detailed flow of a special playback process S320 of FIG. 6(A). FIG. 7(B) shows a detailed flow of a normal playback process S420 of FIG. 6(A). Note that it is here assumed that a plurality of channels including channels A and B are to be processed.

As shown in FIGS. 7(A) and 7(B), the special playback process S320 and the normal playback process S420 of this embodiment are different from the special playback process S300 and the normal playback process S400 of Embodiment 1 only in a process S312. Specifically, in the process S312, the image size information is stored in addition to the structure information. The image size information is used along with the structure information in the display target determining process S220.

Also, as shown in FIG. 6(B), the display target determining process S220 of this embodiment is different from the display target determining process S200 of Embodiment 1 in that a process S212 is added. Specifically, in the display target determining process S220 of this embodiment, the required-for-decoding number of frames F(x) is obtained for a display target candidate on each channel (S202) based on the structure information, and thereafter, the required-for-decoding number of frames F(x) is corrected based on the image size information (S212). The other portions of the process are similar to those of the display target determining process S200 of Embodiment 1.

As an example of the correction based on the image size information, the required-for-decoding number of frames F(x) for each channel is corrected, taking into consideration the ratio of image sizes on channels. For example, when the channel A has the HD size and the channel B has half the HD size in the horizontal direction, F(x) for the channel A is used as it is (scaling ratio=1) and F(x) for the channel B is multiplied by 1/2 (scaling ratio=0.5). In general, since a macroblock which is a process unit is the same, it tends to take a longer period of time to decode an image as the image size increases. Therefore, it can be considered that the corrected value approximately correlates with a period of time required to obtain an image of a display target candidate.

As described above, according to this embodiment, in addition to an operational effect similar to that of Embodiment 1, a value corrected based on the image size information is used as the evaluation index based on the difference in the required-for-decoding number of frames between each channel, whereby an image size can also be taken into consideration in the display target determining process. As a result, an actual difference in decoding time period between each channel can be more accurately reflected on the display target determining process, resulting in a more natural reproduced image.

### (Embodiment 3)

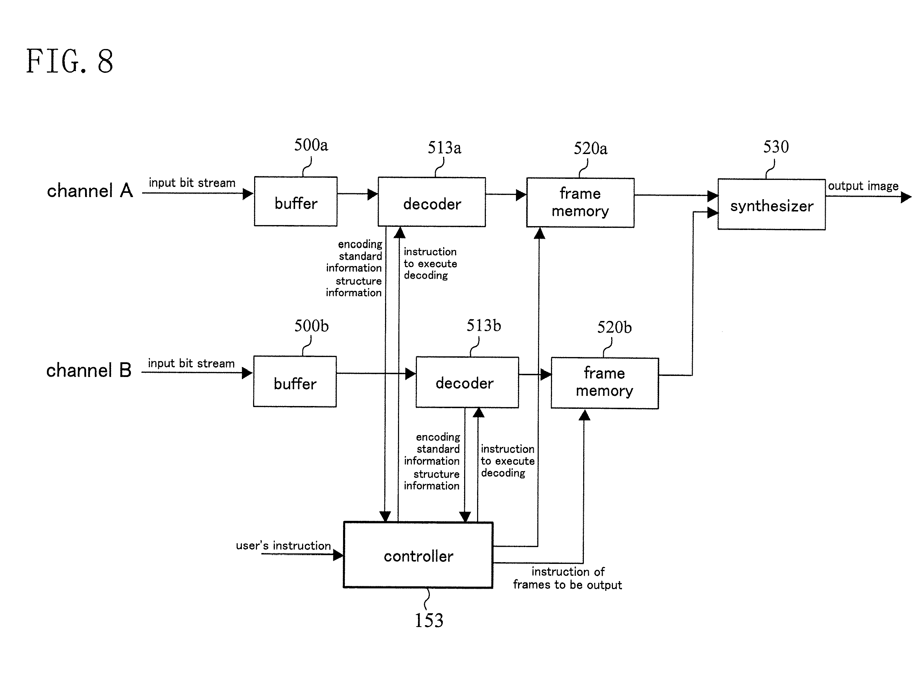

FIG. 8 is a diagram showing a configuration of a motion picture decoding device according to Embodiment 3 of the present invention. In FIG. 8, the same components as those of FIG. 1 are indicated by the same reference symbols and will not be here described in detail. The configuration of FIG. 8 is different from that in FIG. 1 of Embodiment 1 in processes of decoders 513a and 513b and a controller 153.

This embodiment is different from Embodiment 1 in that the decoders 513a and 513b output encoding standard information in addition to the structure information, and the controller 153 determines display targets using the encoding standard information in addition to the structure information. The decoders 513a and 513b previously analyze the structure information and the encoding standard information when decoding bit streams for forward playback. The structure information and the encoding standard information output from the decoders 513a and 513b are stored in information storing means provided in the controller 153.

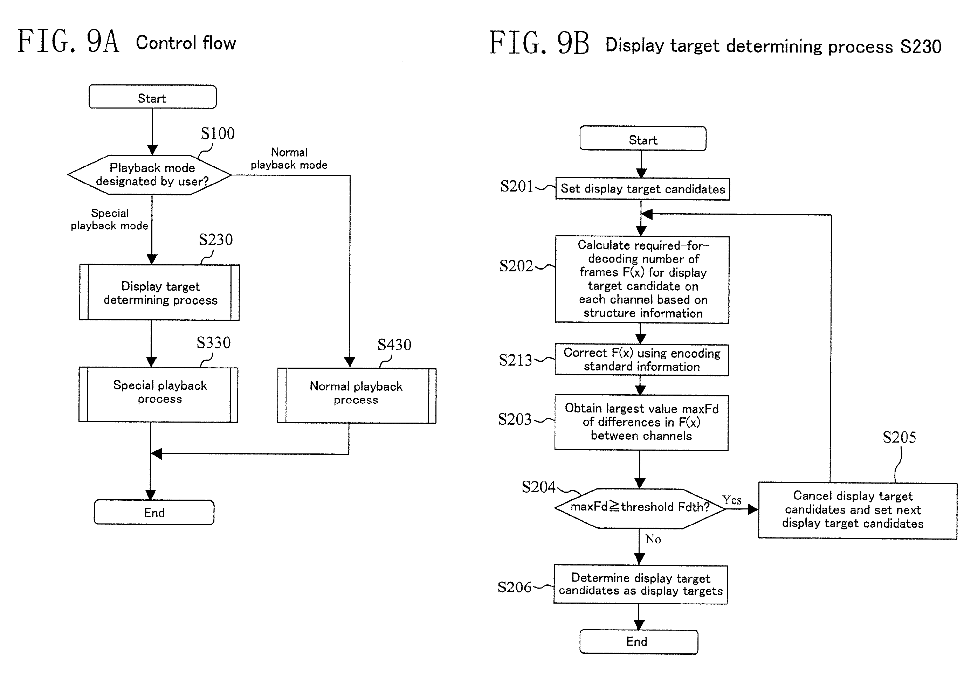

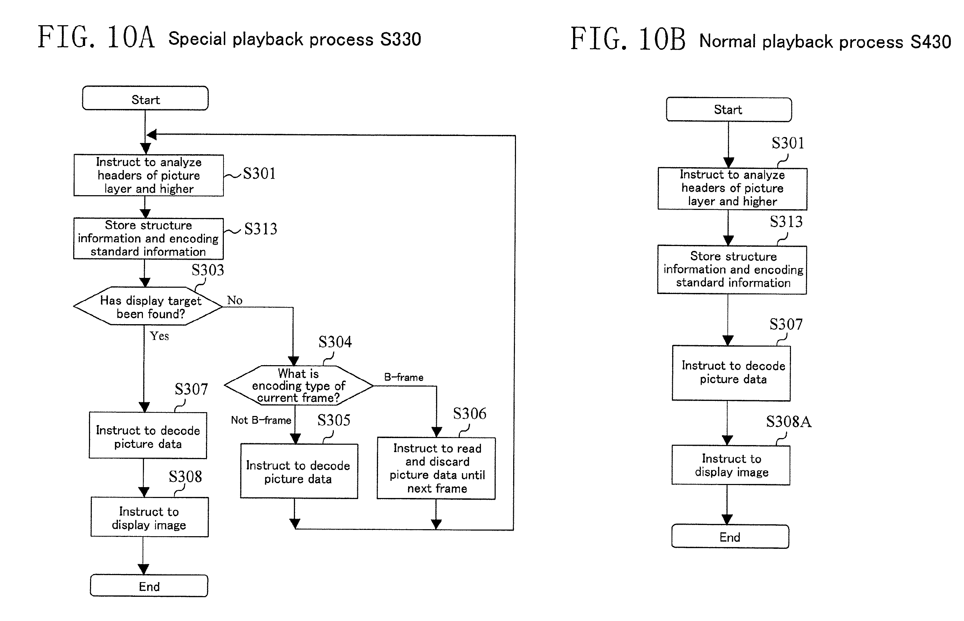

FIGS. 9 and 10 are flowcharts showing specific operation of the controller 153. In FIGS. 9 and 10, the same steps as those of FIGS. 3 and 4 of Embodiment 1 are indicated by the same reference symbols and will not be here described in detail. FIG. 9(A) shows a control flow of basic operation. FIG. 9(B) shows a detailed flow of a display target determining process S230 of FIG. 9(A). FIG. 10(A) shows a detailed flow of a special playback process S330 of FIG. 9(A). FIG. 10(B) shows a detailed flow of a normal playback process S430 of FIG. 9(A). Note that it is here assumed that a plurality of channels including channels A and B are to be processed.

As shown in FIGS. 10(A) and 10(B), the special playback process S330 and the normal playback process S430 of this embodiment are different from the special playback process S300 and the normal playback process S400 of Embodiment 1 only in a process S313. Specifically, in the process S313, the encoding standard information is stored in addition to the structure information. The encoding standard information is used along with the structure information in the display target determining process S230.

Also, as shown in FIG. 9(B), the display target determining process S230 of this embodiment is different from the display target determining process S200 of Embodiment 1 in that a process S213 is added. Specifically, in the display target determining process S230 of this embodiment, the required-for-decoding number of frames F(x) is obtained for a display target candidate on each channel based on the structure information (S202), and thereafter, the required-for-decoding number of frames F(x) is corrected based on the encoding standard information (S213). The other portions of the process are similar to those of the display target determining process S200 of Embodiment 1.

As an example of the correction based on the encoding standard information, the required-for-decoding number of frames F(x) for each channel is corrected, taking into consideration the ratio of average decoding time periods in the encoding standards of the channels. For example, when the channel A is of the MPEG2 standard and the channel B is of the H.264 standard, F(x) for the channel A is multiplied by 1/2 (scaling ratio=0.5) and F(x) for the channel B is used as it is (scaling ratio=1). In general, it tends to take a longer period of time to decode an image as the encoding standard is more complicated. Therefore, it can be considered that the corrected value approximately correlates with a period of time required to obtain an image of a display target candidate.

As described above, according to this embodiment, in addition to an operational effect similar to that of Embodiment 1, a value corrected based on the encoding standard information is used as the evaluation index based on the difference in the required-for-decoding number of frames, whereby the encoding standard can also be taken into consideration in the display target determining process. As a result, an actual difference in decoding time period between each channel can be more accurately reflected on the display target determining process, resulting in a more natural reproduced image.

Note that, since the encoding standard does not frequently change in a bit stream, the encoding standard information of each channel does not necessarily need to be obtained every time the process of analyzing the header of the picture layer is performed. For example, it is obvious that the encoding standard information may be separately supplied to the device from the outside.

### (Embodiment 4)

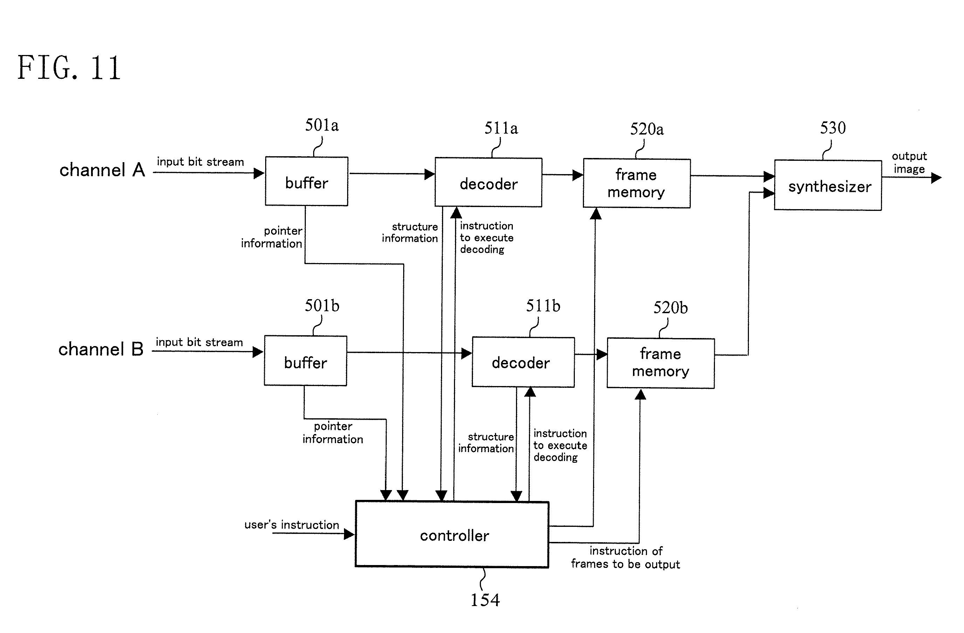

FIG. 11 is a diagram showing a configuration of a motion picture decoding device according to Embodiment 4 of the present invention. In FIG. 11, the same components as those of FIG. 1 are indicated by the same reference symbols and will not be here described in detail. The configuration of FIG. 11 is different from that in FIG. 1 of Embodiment 1 in functions of buffers (buffer memories) 501a and 501b and a process of a controller 154.

This embodiment is different from Embodiment 1 in that the buffers 501a and 501b output pointer information to the controller 154 in addition to outputting of bit streams to the decoders 511a and 511b, and the controller 154 determines display targets using the pointer information in addition to the structure information. The pointer information refers to, for example, information indicating changes in positions of read pointers in the buffers 501a and 501b. From the pointer information, the amount of a shift of the pointer position in each frame, i.e., the amount of codes of each frame can be obtained. The pointer information output from the buffers 501a and 501b is stored along with the structure information output from the decoder 511a in information storing means provided in the controller 154.

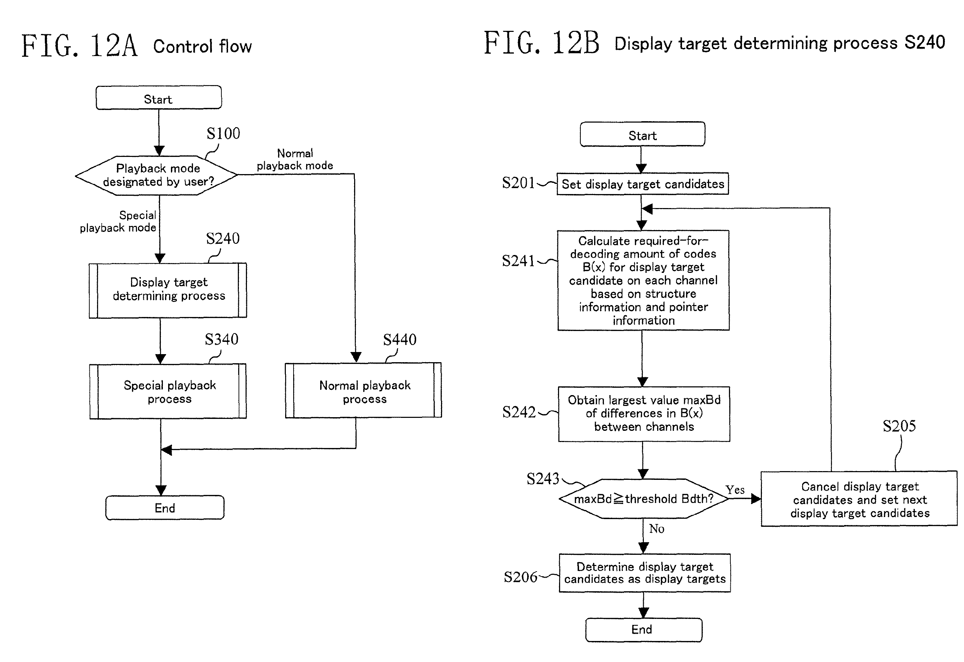

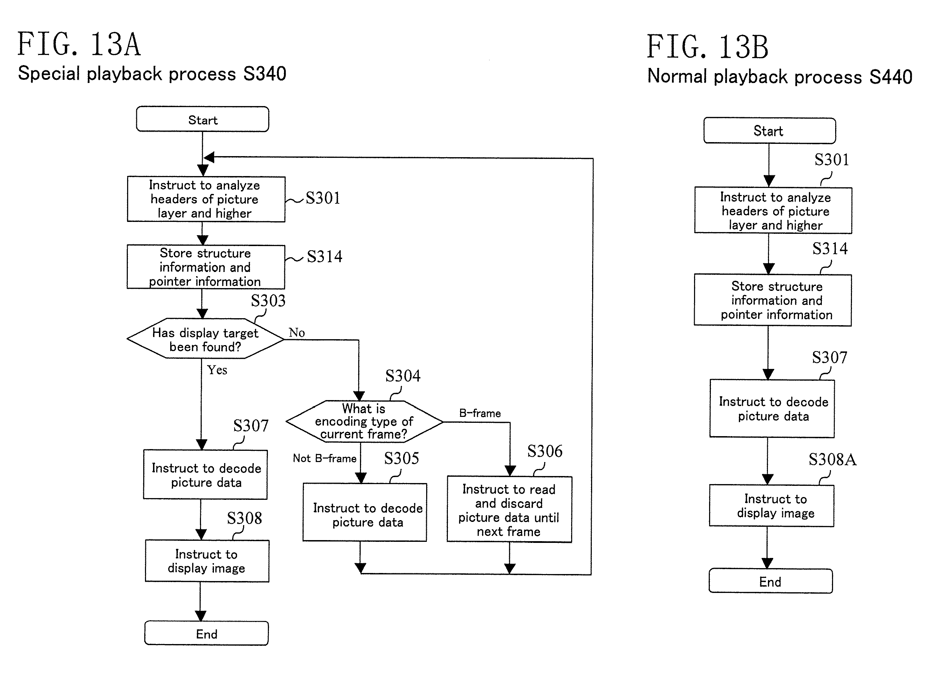

FIGS. 12 and 13 are flowcharts showing specific operation of the controller 154. In FIGS. 12 and 13, the same steps as those in FIGS. 3 and 4 of Embodiment 1 are indicated by the same reference symbols and will not be here described in detail. FIG. 12(A) shows a control flow of basic operation. FIG. 12(B) shows a detailed flow of a display target determining process S240 of FIG. 12(A). FIG. 13(A) shows a detailed flow of a special playback process S340 of FIG. 12(A). FIG. 13(B) shows a detailed flow of a normal playback process S440 of FIG. 12(A). Note that it is here assumed that a plurality of channels including channels A and B are to be processed.

As shown in FIGS. 13(A) and 13(B), the special playback process S340 and the normal playback process S440 of this embodiment are different from the special playback process S300 and the normal playback process S400 of Embodiment 1 only in a process S314. Specifically, in the process S314, the pointer information is stored in addition to the structure information. The pointer information is used along with the structure information in the display target determining process S240.

Also, as shown in FIG. 12(B), the display target determining process S240 of this embodiment is different from the display target determining process S200 of Embodiment 1 in that processes S241, S242 and S243 are provided instead of the processes S202, S203 and S204. Specifically, in the display target determining process S240 of this embodiment, the amount of codes required to decode a display target candidate on each channel (the required-for-decoding amount of codes) B(x) is calculated based on the structure information and the pointer information (S241), where x represents a channel. Here, the controller 154 can calculate the amount of codes of each frame based on a change in pointer position included in the pointer information. Moreover, the calculated amount of codes of each frame can be used to calculate the total amount of codes to be decoded until a display target candidate is obtained, i.e., the required-for-decoding amount of codes B(x). In general, it tends to take a longer period of time to perform decoding as the amount of codes increases. Therefore, it can be considered that the required-for-decoding amount of codes approximately correlates with a period of time required to obtain an image of a display target candidate.

Thereafter, a largest value maxBd of differences in the required-for-decoding amount of codes B(x) between all channels is calculated (S242), and the largest value maxBd is compared with a predetermined threshold Bdth (S243). When the largest value maxBd is smaller than the threshold Bdth, current display target candidates are determined as display targets (S206), and the process is ended. On the other hand, when the largest value maxBd is larger than or equal to the threshold Bdth, the current display target candidates are canceled, and the next display target candidates are set (S205), and the process is performed from S250 again.

In the display target determining process S240, although the largest value of the difference in the required-for-decoding amount of codes is used as the evaluation index based on the difference in the required-for-decoding amount of codes between channels, other values may be used. For example, an average value of differences between any two channels may be calculated and used as the evaluation index.

As described above, according to this embodiment, the required-for-decoding amount of codes is calculated for a display target candidate on each channel. When an evaluation index based on a difference in the required-for-decoding amount of codes is smaller than a predetermined threshold, the display target candidates are determined as display targets, and when otherwise, the display target candidates are canceled. In other words, frames having the evaluation index based on the difference in the required-for-decoding amount of codes larger than or equal to the predetermined threshold are excluded from display targets. As a result, frames having a large difference in the required-for-decoding amount of codes which are responsible for variations in screen updating time between channels are not set as display targets. Therefore, it is possible to prevent updating of a screen from significantly varying between channels, resulting in a more natural reproduced image.

Note that it has been assumed in this embodiment that the amount of codes of each frame is obtained based on the pointer information output from the buffers 501 a and 501 b. Instead of the pointer information, for example, the amount of decoded codes may be counted using variable length decoders provided in the decoders 511a and 511b, and the counted code amount may be used to obtain the amount of codes of each frame.

### (Embodiment 5)

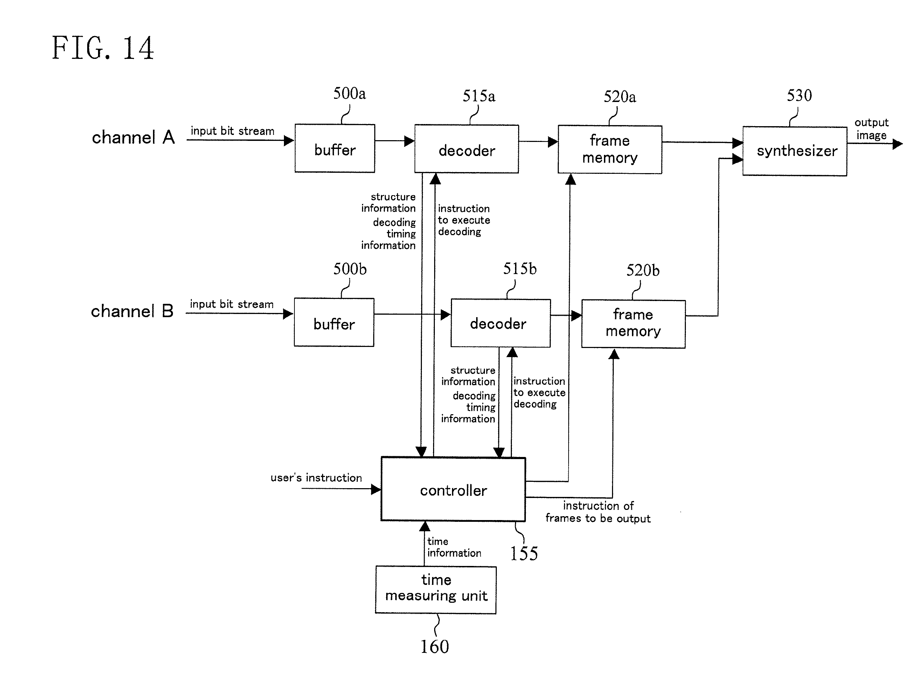

FIG. 14 is a diagram showing a configuration of a motion picture decoding device according to Embodiment 5 of the present invention. In FIG. 14, the same components as those of FIG. 1 are indicated by the same reference symbols and will not be here described in detail. The configuration of FIG. 14 is different from that in FIG. 1 of Embodiment 1 in processes of decoders 515a and 515b and a controller 155. Moreover, a time measuring unit 160 is added. Typically, most motion picture decoding devices have a function of decoding audio as well as video. In this case, the motion picture decoding device performs a process of comparing time stamp information about video and audio with reference times and adjusting both of the video and the audio so that they are substantially simultaneously output (AV synchronization process or lip sync). For example, means for holding the reference times can be used as the time measuring unit 160.

This embodiment is different from Embodiment 1 in that the decoders 515a and 515b output decoding timing information in addition to the structure information, and the controller 155 determines display targets using the decoding timing information in addition to the structure information. The decoding timing information refers to, for example, information indicating a head timing and an end timing when each frame is decoded. The decoders 515a and 515b output the decoding timing information when decoding bit streams for forward playback. The controller 155, when receiving the decoding timing information from the decoders 515a and 515b, obtains the time with reference to time information of the time measuring unit 160, and stores the time into information storing means. As a result, start and end times of decoding of each frame are stored in the controller 155.

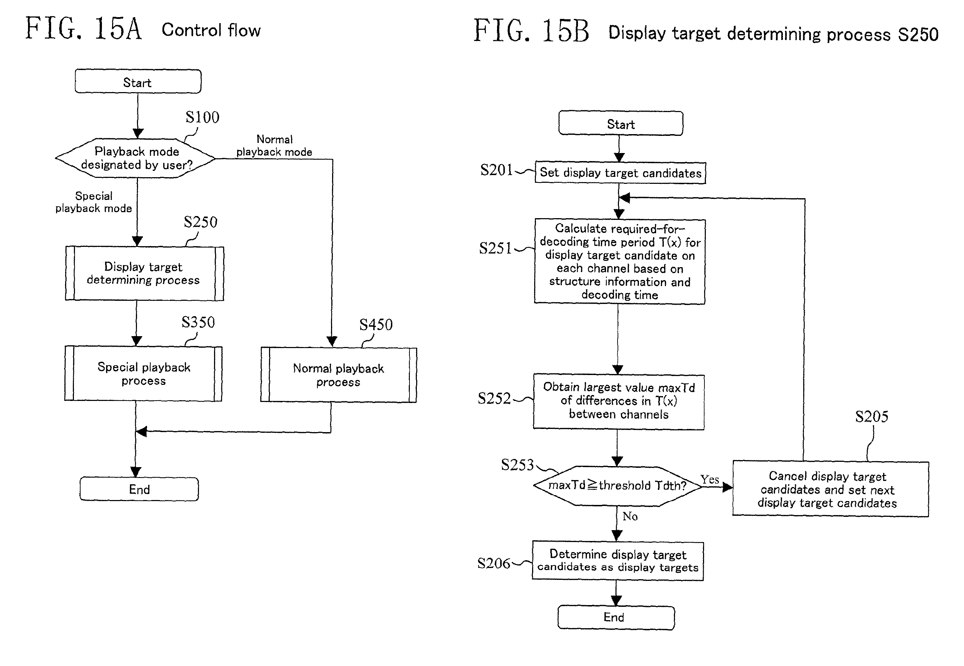

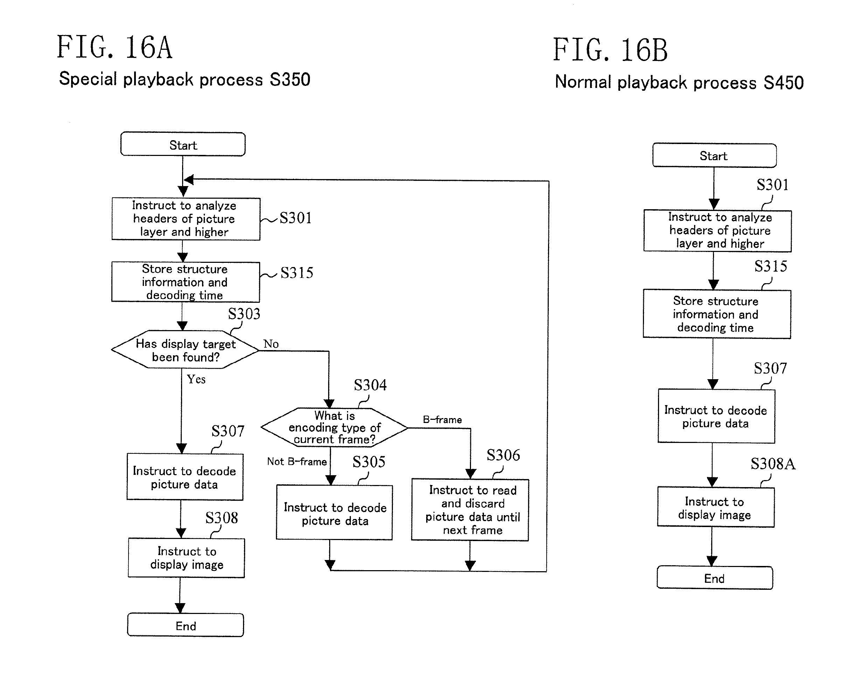

FIGS. 15 and 16 are flowcharts showing specific operation of the controller 155. In FIGS. 15 and 16, the same steps as those in FIGS. 3 and 4 of Embodiment 1 are indicated by the same reference symbols and will not be here described in detail. FIG. 15(A) shows a control flow of basic operation. FIG. 15(B) shows a detailed flow of a display target determining process S250 of FIG. 15(A). FIG. 16(A) shows a detailed flow of a special playback process S350 of FIG. 15(A). FIG. 16(B) shows a detailed flow of a normal playback process S450 of FIG. 15(A). Note that it is here assumed that a plurality of channels including channels A and B are to be processed.

As shown in FIGS. 16(A) and 16(B), the special playback process S350 and the normal playback process S450 of this embodiment are different from the special playback process S300 and the normal playback process S400 of Embodiment 1 only in a process S315. Specifically, in the process S315, decoding times obtained based on the decoding timing information are stored in addition to the structure information. The decoding times are used along with the structure information in the display target determining process S250.

Also, as shown in FIG. 15(B), the display target determining process S250 of this embodiment is different from the display target determining process S200 of Embodiment 1 in that processes S251, S252 and S253 are provided instead of the processes S202, S203 and S204. Specifically, in the display target determining process S250 of this embodiment, a period of time required for decoding with respect to a display target candidate on each channel (required-for-decoding time period) T(x) is calculated based on the structure information and the decoding times (S251), where x represents a channel. Here, the controller 155 can calculate a decoding time period for each frame based on a head decoding time and an end decoding time for the frame. Moreover, the calculated decoding time period for each frame can be used to calculate a total period of time required for decoding until a display target candidate is obtained, i.e., the required-for-decoding time period T(x).

Thereafter, a largest value maxTd of differences in the required-for-decoding time period T(x) between all channels is calculated (S252), and the largest value maxTd is compared with a predetermined threshold Tdth (S253). When the largest value maxTd is smaller than the threshold Tdth, current display target candidates are determined as display targets (S206), and the process is ended. On the other hand, when the largest value maxTd is larger than or equal to the threshold Tdth, the current display target candidates are canceled, and the next display target candidates are set (S205), and the process is performed from S260 again.

In the display target determining process S250, although the largest value of the difference in the required-for-decoding time period is used as the evaluation index based on the difference in the required-for-decoding time period between channels, other values may be used. For example, an average value of the differences between any two channels may be used as the evaluation index.

As described above, according to this embodiment, the required-for-decoding time period is calculated for a display target candidate on each channel. When an evaluation index based on a difference in the required-for-decoding time period is smaller than a predetermined threshold, display target candidates are determined as display targets. On the other hand, when otherwise, the display target candidates are canceled. In other words, frames having the evaluation index based on the difference in the required-for-decoding time period larger than or equal to the predetermined threshold are excluded from display targets. As a result, frames having a large difference in the required-for-decoding time period which are responsible for variations in screen updating time between channels are not set as display targets. Therefore, it is possible to prevent updating of a screen from significantly varying between channels, resulting in a more natural reproduced image. Moreover, by actually measuring a period of time required to decode each frame, an actual difference in decoding time period between each channel can be more accurately reflected on the display target determining process, resulting in a more natural reproduced image.

Note that, in Embodiments 1 to 5 above, if cancellation of display target candidates occurs excessively many consecutive times, the frequency of updating of a screen extremely decreases, so that the resultant image is recognized as substantially a still image, disadvantageously resulting in an increase in unnaturalness for a motion picture. In order to avoid this problem, if cancellation of display target candidates occurs a predetermined number of times or more, the cancellation may be invalidated and the display target candidates may be forcedly determined as display targets and may be displayed. Particularly, as an example, in order to increase the frequency of updating of a screen for primary video (video on a channel displayed in a larger area), which it is considered that the user pays attention to in a PinP image more frequently than secondary video (video on another channel displayed in a smaller area), the channel for primary video may be previously designated as a priority channel, and only this channel may be subjected to the aforementioned cancellation invalidating process.

Note that, in Embodiments 1 to 5 above, an evaluation index based on the difference in the required-for-decoding number of frames, the required-for-decoding amount of codes or the required-for-decoding time period is obtained for display target candidates in the display target determining process, and is compared with a predetermined threshold, thereby determining whether the display target candidates are to be determined as display targets or canceled. Instead of this, for example, the following process may be performed. Specifically, the evaluation index based on the difference in the required-for-decoding number of frames or the like may be previously calculated for frames at the same time, and display targets may be selected from frames whose evaluation index is smaller than a predetermined threshold in accordance with a designated special playback mode. By such a process, frames having the evaluation index based on the difference in the required-for-decoding number of frames or the like larger than or equal to the predetermined threshold can be excluded from display targets. Therefore, as in each of Embodiments 1 to 5 above, it is possible to prevent updating of a screen from significantly varying between channels, resulting in a more natural reproduced image.

### (Embodiment 6)

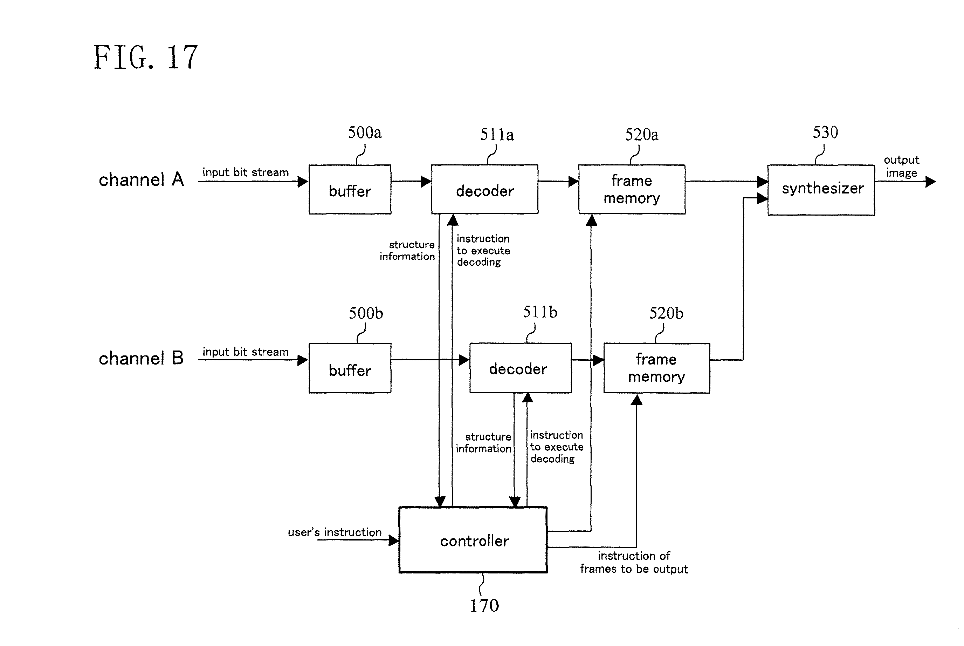

FIG. 17 is a diagram showing a configuration of a motion picture decoding device according to Embodiment 6 of the present invention. In FIG. 17, the same components as those of FIG. 1 are indicated by the same reference symbols and will not be here described in detail. The configuration of FIG. 17 is different from that in FIG. 1 of Embodiment 1 in a process of a controller 170.

It has been assumed in Embodiments 1 to 5 above that, after display targets are determined, when a display target is completely decoded on a channel, the resultant image data is immediately reproduced. By contrast, in this embodiment, a channel for which decoding of a display target is predicted to be last completed (hereinafter referred to as a delayed channel) is calculated, and updating of a displayed image for the other channels is not performed and waits until decoding is completed for the delayed channel, thereby synchronizing their display timings.

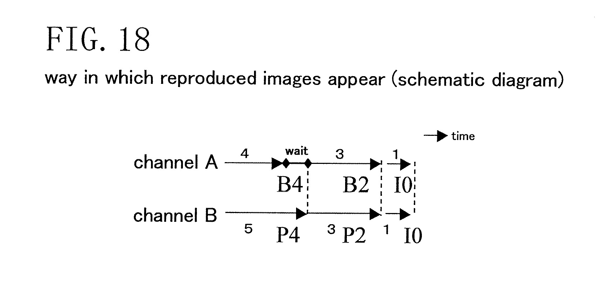

FIG. 18 is a schematic diagram showing an example way in which reproduced images appear in this embodiment. As shown in FIG. 18, when it is predicted that decoding will be completed for a channel A earlier than for a channel B, display updating for the channel A waits until decoding for the channel B is completed, and is performed in synchronization with display updating for the channel B. Also, conversely, when it is predicted that decoding will be completed for the channel B earlier than for the channel A, display updating for the channel B waits until decoding for the channel A is completed, and is performed in synchronization with display updating for the channel A.

In this embodiment, it is assumed that display targets are determined in accordance with a designated predetermined special playback mode. Specifically, although display target candidates are canceled with reference to a predetermined criterion using the required-for-decoding number of frames or the like in Embodiments 1 to 5 above, such cancellation of display target candidates is assumed not to be performed in this embodiment. For example, when reverse slow playback is instructed, display targets are determined backward in predetermined frame intervals.

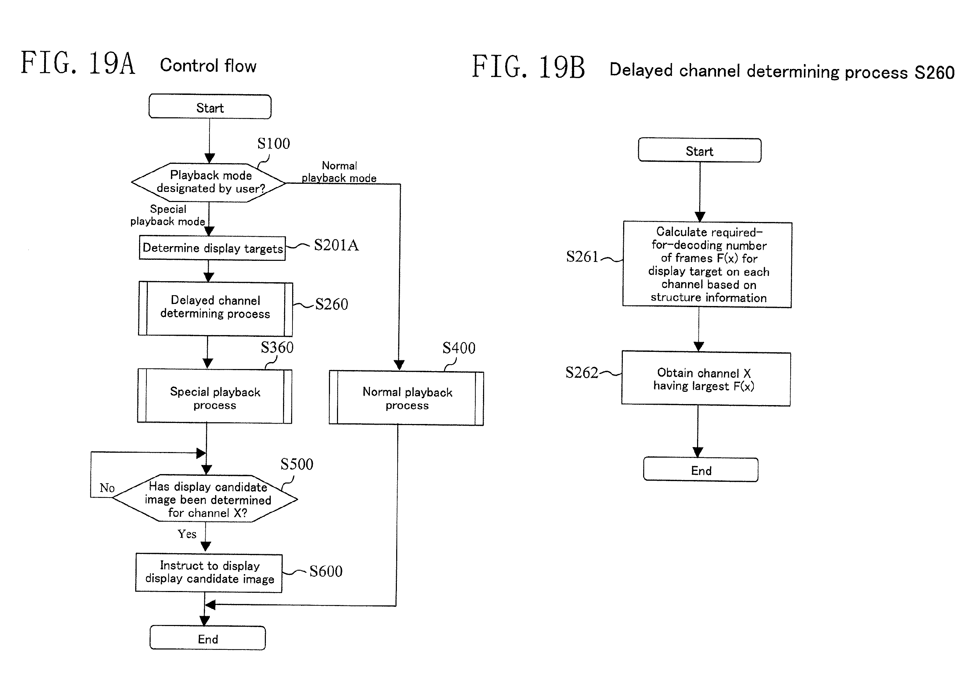

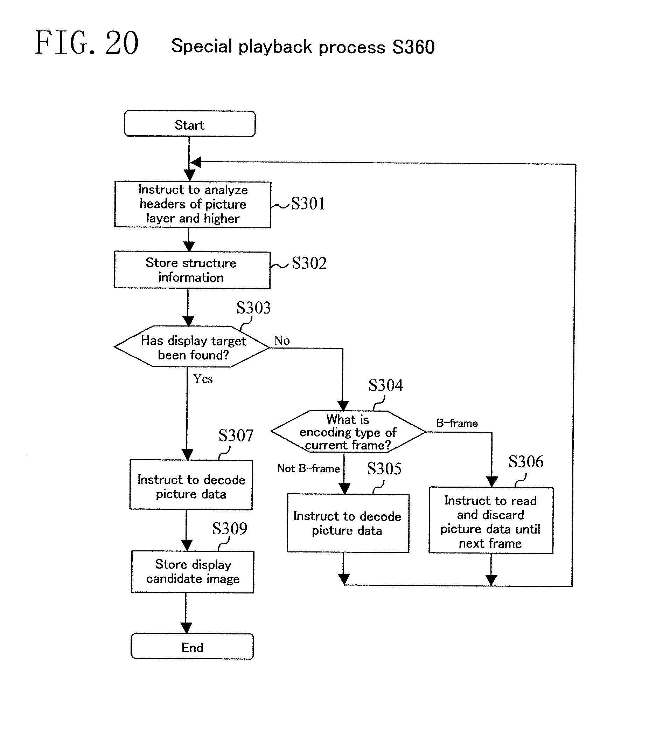

FIGS. 19 and 20 are flowcharts showing specific operation of the controller 170. In FIGS. 19 and 20, the same steps as those in FIGS. 3 and 4 of Embodiment 1 are indicated by the same reference symbols and will not be here described in detail. FIG. 19(A) shows a control flow of basic operation. FIG. 19(B) shows a detailed flow of a delayed channel determining process S260 of FIG. 19(A). FIG. 20 shows a detailed flow of a special playback process S360 of FIG. 19(A). Also, a normal playback process S400 of FIG. 19(A) is similar to that of FIG. 4(B). Note that it is here assumed that a plurality of channels including channels A and B are to be processed.

As shown in FIG. 19(A), in the case of the special playback, initially, display targets are determined in accordance with a designated special playback mode (S201A). Next, the delayed channel determining process S260 is performed. In the delayed channel determining process S260, as shown in FIG. 19(B), the required-for-decoding number of frames F(x) for a display target on each channel is calculated based on the structure information (S261), and a channel X having a largest required-for-decoding number of frames F(x) is obtained (S262). The channel X is the delayed channel.

Next, the special playback process S360 is performed. The special playback process S360 of this embodiment is different from the special playback process S300 of Embodiment 1 only in a process S309. Specifically, in the process S309, after an instruction to decode picture data is issued (S307), when decoded image data is stored into frame memories 520a and 520b, an instruction to display the image is not issued, but the fact that the image is ready to be displayed is stored. Here, the image of a display target which is not yet used for display updating is referred to as a display candidate image.

When a display target has been completely decoded on the delayed channel X and a display candidate image on the delayed channel X has been determined (S500) as a result of the special playback process S360 with respect to all channels, the frame memories 520a and 520b for the channels are instructed to display the stored display candidate images (S600).

Although it has been assumed in the example above that display updating waits until a display target on the delayed channel X is completely decoded in the process S500, the process S500 may transition to the next process S600 as a time-out process when the waiting time period becomes longer than or equal to a predetermined period of time. In this case, a period of time until the next display updating is prevented from being excessily long, resulting in a more natural reproduced image.

As described above, according to this embodiment, the required-for-decoding number of frames is calculated for each display target, a channel having a largest required-for-decoding number of frames is determined as the delayed channel, and display updating for each channel waits until a frame on the delayed channel is completely decoded, thereby synchronizing display updating timings for all the channels. As a result, it is possible to prevent the screen updating time from significantly varying between channels, resulting in a more natural reproduced image.

Although the required-for-decoding number of frames F(x) is used so as to determine the delayed channel in this embodiment, a value obtained by correcting the required-for-decoding number of frames F(x) based on the image size information or the encoding standard information may be used as in Embodiments 2 and 3. Alternatively, the required-for-decoding amount of codes B(x) shown in Embodiment 4 above or the required-for-decoding time period T(x) shown in Embodiment 5 above may be used. In either of these cases, it is possible to prevent the screen updating time from significantly varying between channels, resulting in a more natural reproduced image.

Although it has been assumed above that display updating for each channel is performed in synchronization with display updating for the delayed channel, display updating for each channel may be instead performed after a predetermined time has elapsed since the delayed channel got ready to be displayed.

Although it has been assumed in this embodiment that a display target is determined simply in accordance with a designated special playback mode, a process of selecting a display target using an evaluation index based on a difference in the required-for-decoding number of frames or the like between each channel as shown in Embodiments 1 to 5 may be additionally performed. For example, in the control flow of FIG. 19(A), the display target determining processes S200, S220, S230, S240 and S250 of Embodiments 1 to 5 may be executed instead of the process S20 1 A.

### (Embodiment 7)

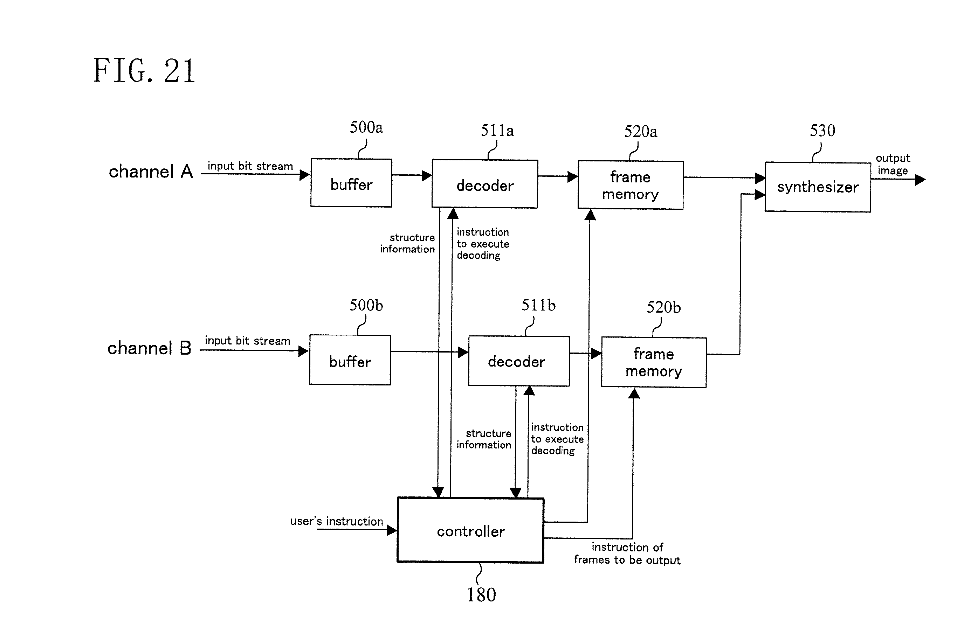

FIG. 21 is a diagram showing a configuration of a motion picture decoding device according to Embodiment 7 of the present invention. In FIG. 21, the same components as those of FIG. 1 are indicated by the same reference symbols and will not be here described in detail. The configuration of FIG. 21 is different from that in FIG. 1 of Embodiment 1 in a process of a controller 180.

It has been assumed in Embodiments 1 to 5 above that the picture data of B-frames is read and discarded in the special playback process (S306). This is because B-frames are not reference frames and are not required to decode the other frames. By contrast, it is assumed in this embodiment that the picture data of B-frames is decoded as is similar to the other encoding-type frames.

Also, it has been assumed in Embodiment 1 that, in the display target determining process, evaluation is performed using the required-for-decoding number of frames. By contrast, it is assumed in this embodiment that evaluation is performed using the number of all frames in a GOP which are present until reaching a display target candidate instead of the number of frames required for decoding. Here, the number of frames until reaching a display target candidate is referred to as "the until-reaching number of frames."

By employing such a process, decoding of each frame is invariably performed no matter whether the frame is a B-frame in the special playback process, advantageously resulting in a simpler flow, i.e., simpler control.

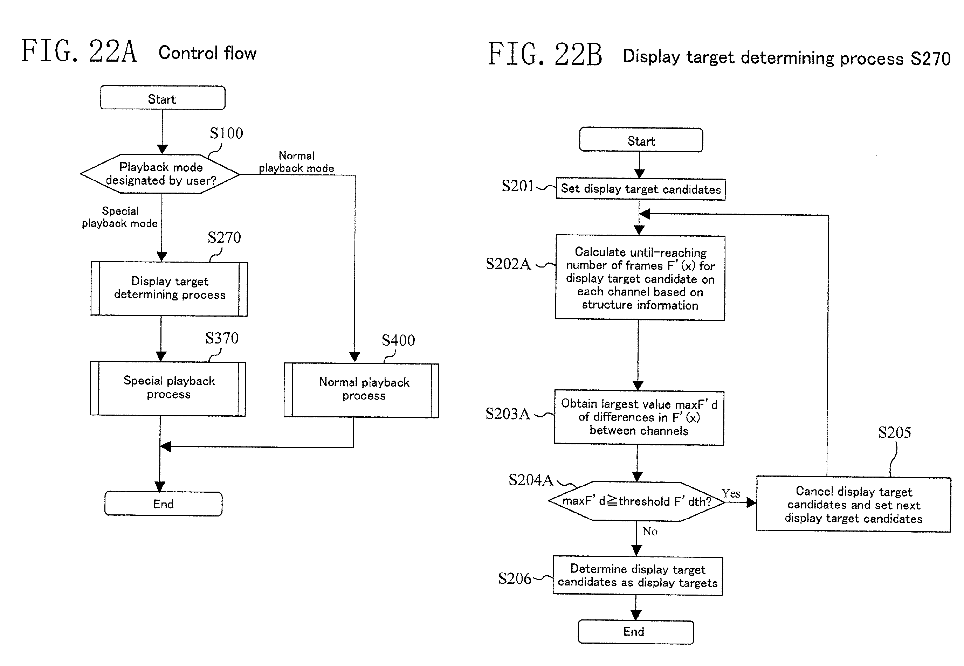

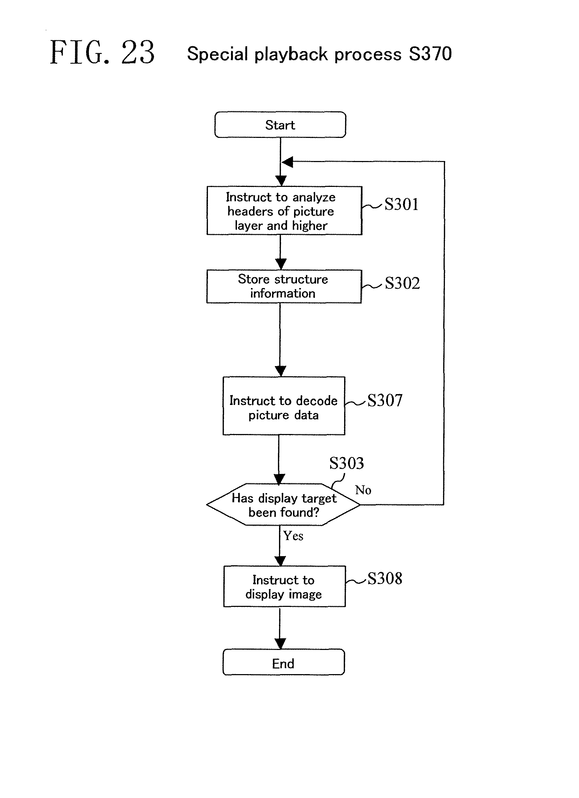

FIGS. 22 and 23 are flowcharts showing specific operation of the controller 180. In FIGS. 22 and 23, the same steps as those in FIGS. 3 and 4 of Embodiment 1 are indicated by the same reference symbols and will not be here described in detail. FIG. 22(A) shows a control flow of basic operation. FIG. 22(B) shows a detailed flow of a display target determining process S270 of FIG. 22(A). FIG. 23 shows a detailed flow of a special playback process S370 of FIG. 22(A). Also, the normal playback process S400 of FIG. 22(A) is similar to that of FIG. 4(B). Note that it is here assumed that a plurality of channels including channels A and B are to be processed.

As shown in FIG. 22(B), the until-reaching number of frames F'(x) is used instead of the required-for-decoding number of frames F(x) in the display target determining process S270. Specifically, the controller 180 obtains the until-reaching number of frames F'(x) for a display target candidate on each channel based on the structure information (S202A). Next, a largest value maxFd' of differences in the until-reaching number of frames F'(x) between all channels is calculated (S203A), and the largest value maxFd' is compared with a predetermined threshold Fdth' (S204A). When the largest value maxFd' is smaller than the threshold Fdth', current display target candidates are determined as display targets (S206), and the process is ended. On the other hand, when the largest value maxFd' is larger than or equal to the threshold Fdth', the current display target candidates are canceled, the next display target candidates are set (S205), and the process is performed from S202A again.

As shown in FIG. 23, the picture data of all frames is decoded irrespective of the encoding types in the special playback process S370. Specifically, the controller 180 initially instructs the decoder 511a to analyze the headers of the picture layer and higher of a bit stream (S301), and stores the resultant structure information (S302). Next, the controller 180 instructs the decoding means 511a to decode picture data (S307). Next, the controller 180 determines whether or not a frame matches a display target (S303). When the frame matches the display target, the controller 180 instructs the frame memory 520a to display the image (S308). On the other hand, when the frame does not match the display target, the controller 180 returns to S301 and starts the process with respect to the next frame.

As described above, according to this embodiment, the until-reaching number of frames is calculated for a display target candidate on each channel. If an evaluation index based on a difference in the until-reaching number of frames is smaller than a predetermined threshold, the display target candidates are determined as display targets, and when otherwise, the display target candidates are canceled. As a result, frames having a large difference in the until-reaching number of frames which are responsible for variations in screen updating time between channels are not set as display targets. Therefore, it is possible to prevent updating of a screen from significantly varying between channels, resulting in a more natural reproduced image.

Although the until-reaching number of frames F'(x) is used to determine display targets in this embodiment, a value obtained by correcting the until-reaching number of frames F'(x) based on the image size information or the encoding standard information may be used as in Embodiments 2 and 3 above. Alternatively, the total amount of codes of all frames until reaching a display target candidate (the until-reaching amount of codes) B'(x) may be used as in Embodiment 4 above, or the total time period of decoding of all frames until reaching a display target candidate (the until-reaching time period) T'(x) may be used as in Embodiment 5 above. In either of these cases, it is possible to prevent the screen updating time from varying between channels, resulting in a more natural reproduced image.

### (Embodiment 8)

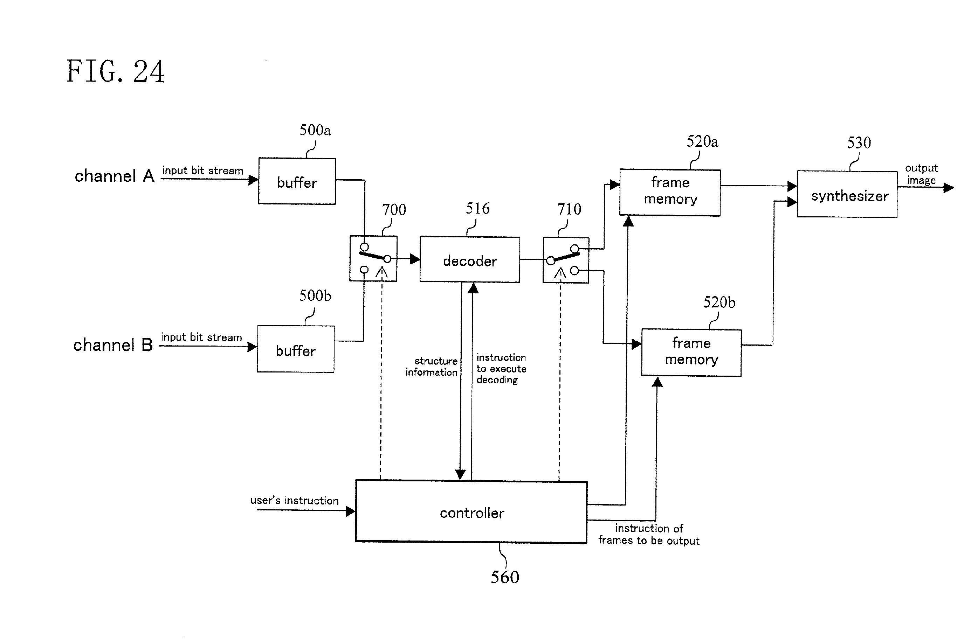

FIG. 24 is a diagram showing a configuration of a motion picture decoding device according to Embodiment 8 of the present invention. In FIG. 24, the same components as those of FIG. 1 are indicated by the same reference symbols and will not be here described in detail.

In Embodiment 1 above, a process of decoding each channel is executed by the separate decoders 511a and 511b. By contrast, in this embodiment, as shown in FIG. 24, only a single decoder 516 is provided, and decoding processes of channels are performed in a time-division manner. Reference symbols 700 and 710 indicate switches. The switch 700 switches inputs to the decoder 516, while the switch 710 switches outputs of the decoder 516. A controller 560 controls the switches 700 and 710 in addition to the decoder 516 and the frame memories 520a and 520b.

Specifically, the decoder of the present invention may include a plurality of decoders provided for the respective channels as in the embodiments above, or alternatively, may include a combination of a single decoder and switches for switching inputs and outputs thereof as in this embodiment.

The bit streams of motion pictures on channels A and B are stored in the buffers 500a and 500b. A bit stream on each channel is supplied via the switch 700 to the decoder 516, and the restored image is stored via the switch 710 into the frame memory 520a or 520b. Here, the controller 560 knows which channel is being subjected to decoding, and controls the switches 700 and 710 so that the switches 700 and 710 select a bit stream and a frame memory for the channel for which a decoding process is being performed.

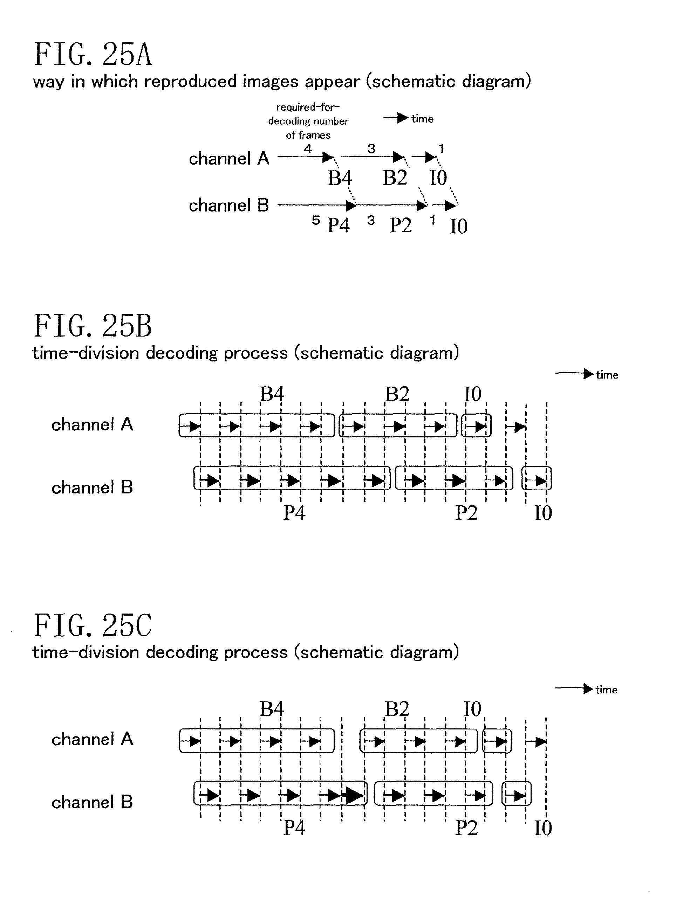

FIG. 25 is a diagram showing the time-division decoding process of this embodiment. When images are reproduced as shown in FIG. 25(A), the decoding processes for the channels are switched in units of a frame as shown in FIG. 25(B).

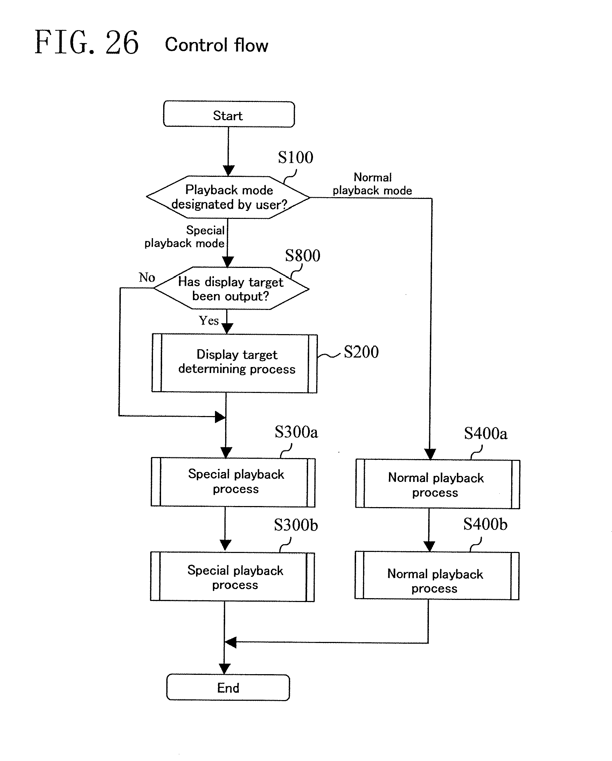

FIG. 26 shows a control flow of basic operation of the controller 560. This control flow is different from that in FIG. 3(A) of Embodiment 1 in the following two points. One of them is that when the special playback mode is designated, a step S800 of determining whether or not display targets have been output is added. When display targets have not been output, the display target determining process S200 is skipped. The other is that a process for the channel A and a process for the channel B are successively executed in each of the process normal playback and the special playback. Specifically, the special playback process S300a for the channel A and the special playback process S300b for the channel B are executed in the special playback, while the normal playback process S400a for the channel A and the normal playback process S400b for the channel B are executed in the normal playback. Note the order of processes for the channel A and the channel B may be reversed. Moreover, when the number of channels is more than two, a process may be executed for each channel.

The display target determining process S200 is similar to that in FIG. 3(B) of Embodiment 1. Also, the normal playback processes S400a and S400b are basically similar to those in FIG. 4(B) of Embodiment 1, except that the switch 700 is switched to the buffer 500a and the switch 710 is switched to the frame memory 520a in the normal playback process S400a, while the switch 700 is switched to the buffer 500b and the switch 710 is switched to the frame memory 520b in the normal playback process S400b.

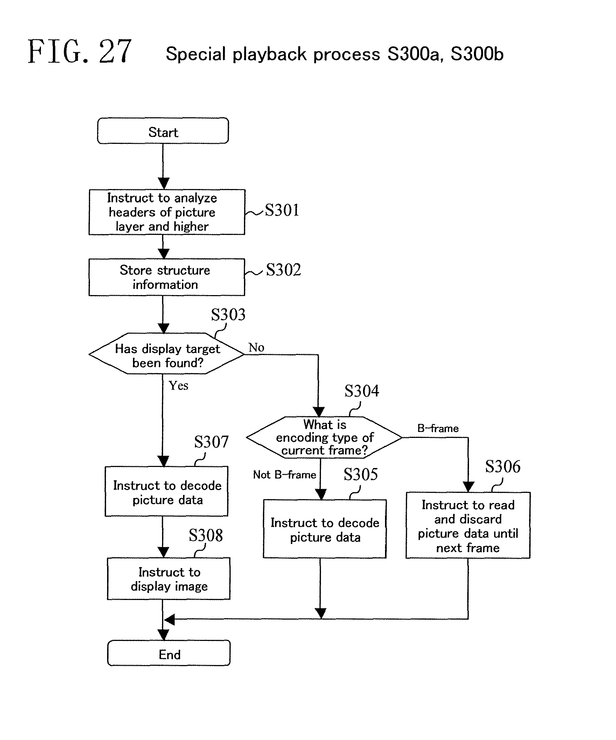

FIG. 27 shows a detailed flow of the special playback processes S300a and S300b. This flow is different from that in FIG. 4(A) of Embodiment 1 in that the process is ended after the processes S305 and S306 instead of proceeding to the process S301 of analyzing the header of the next picture. Also, the switch 700 is switched to the buffer 500a and the switch 710 is switched to the frame memory 520a in the special playback process S300a, while the switch 700 is switched to the buffer 500b and the switch 710 is switched to the frame memory 520b in the special playback process S300b.

According to this embodiment, as is similar to Embodiment 1, frames having a large difference in the required-for-decoding number of frames which are responsible for variations in screen updating time between channels are not set as display targets. Therefore, it is possible to prevent updating of a screen from significantly varying between channels, resulting in a more natural reproduced image. Moreover, in this embodiment, only a single decoder, which typically includes a large number of circuit blocks, is required, resulting in a smaller circuit scale of the decoding device, and therefore, the decoding device can be advantageously provided with low cost. Note that, when the number of channels for which decoding is performed is n and videos on the n channels have the same image size, the decoder 516 needs to have a decoding capability of n-times speed or higher. A higher decoding capability generally requires a higher operating frequency, which leads to larger power consumption, i.e., there is a trade-off therebetween.

Note that a decoding process may not necessarily be switched to another channel in units of a frame. Alternatively, the special playback processes S300a and S300b may be adapted so that a channel from which a display target has not yet been output is subjected to the process with priority, instead of stopping the special playback process with respect to a channel for which a display target has been output. Specifically, as shown in FIG. 25(C), when a decoding process has been completed with respect to a frame B4 on a channel A, the decoding process is not switched to the channel A and the special playback process is continued until a frame P4 on a channel B paired with the frame B4 on the channel A can be output. In this case, screen updating can be more uniformly performed, advantageously resulting in a natural reproduced image.

Note that it is obvious that the configuration including a single decoder as described in this embodiment is applicable to Embodiments 2 to 7 other than Embodiment 1.

Although it has been assumed in each of the embodiments above that the number of motion picture channels is two, there may be three or more channels. In this case, as the evaluation index based on the difference in the required-for-decoding number of frames (the required-for-decoding amount of codes, the required-for-decoding time period, or the until-reaching number of frames) between each channel, the following may be used, for example. Specifically, after the required-for-decoding number of frames or the like is calculated for each channel, a difference between a largest value and a smallest value thereof is used as the evaluation index based on a difference between each channel. Alternatively, an average value of the differences between any two channels may be used as the evaluation index based on a difference between each channel.

Moreover, although it has been assumed in each of the embodiments above that the bit stream data of a motion picture is previously encoded in accordance with the MPEG2 standard, the present invention is obviously applicable to a motion picture decoding method and a motion picture decoding device which perform a decoding process in accordance with other encoding standards, such as the MPEG1 standard, the MPEG4 standard, the H.261 standard, the H.263 standard, the H.264 standard, the VC-1 standard and the like. Note that, in the description above, a B-frame currently being decoded which is not a display target may be read and discarded in the special playback. However, a kind of B-frame may be referenced in some encoding standard, such as the H.264 standard or the like. Therefore, in the case of such an encoding standard, the process is changed so that a B-frame which is likely to be referenced is not discarded after being read.

Also, the bit stream of a motion picture in each of the embodiments above is not limited to a bit stream containing only image data. The present invention is also obviously applicable to a bit stream containing data accompanying image data, such as audio data, text data, subtitle data, still image data for GUI (a menu, etc.) or the like.

Moreover, although reverse slow playback has been described as an example of the special playback in each of the embodiments above, the present invention is also similarly applicable to other special playback, such as fast-forward playback, slow playback, fast-reverse playback or the like.

### (Example Application 1 to Electronic Apparatus)

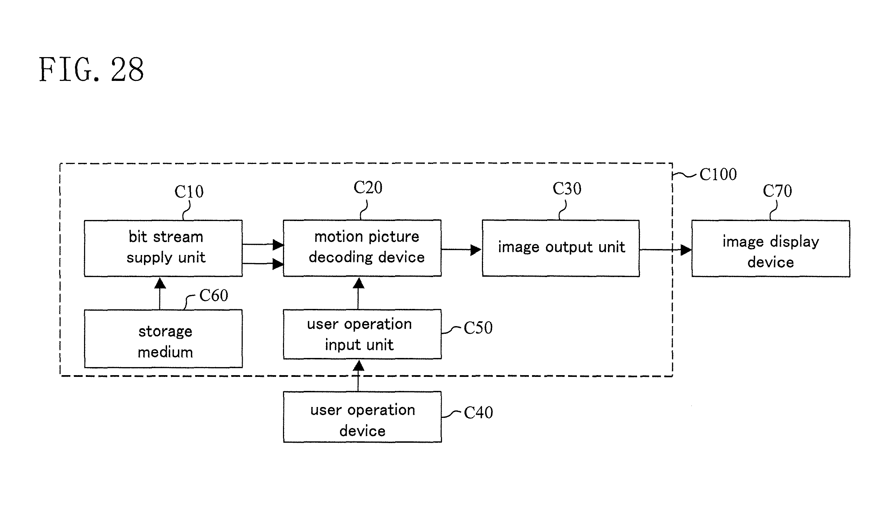

FIG. 28 is a block diagram showing an example configuration of an electronic apparatus including the motion picture decoding device of the present invention. As shown in FIG. 28, the electronic apparatus C100 has a bit stream supply unit C10, an image output unit C30, an accumulation medium C60, and a user operation input unit C50 in addition to a motion picture decoding device C20 according to the present invention. The electronic apparatus C100 also has a user operation device C40 and an image display device C70 as peripheral devices. Note that the accumulation medium C60 may be externally attached to the electronic apparatus C 100.

Here, the bit stream supply unit C10 supplies a bit stream stored in the accumulation medium C60, such as an optical disc (a Blu-ray disc, a DVD, etc.) or the like. The motion picture decoding device C20 reproduces a motion picture corresponding to a bit stream input from the bit stream supply unit C10. The user operation device C40 is used by the user to designate an operation mode of the electronic apparatus C100. The user operation input unit C50 receives an output of the user operation device C40. The image output unit C30 outputs an image reproduced by the motion picture decoding device C20 to the outside, and has a function of interfacing with the image display device C70, such as a display or the like.

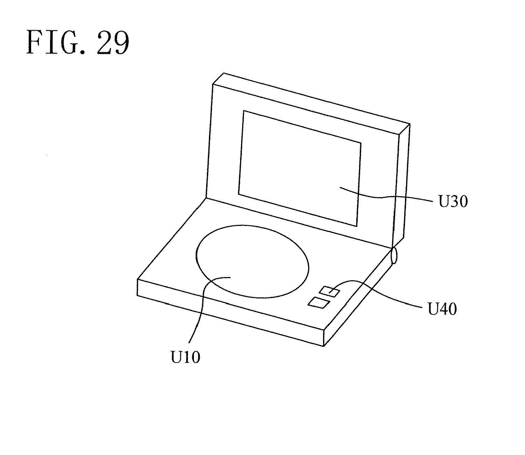

FIG. 29 is an external view of an optical disc reproducing apparatus as an example electronic apparatus. The optical disc reproducing apparatus of FIG. 29 includes a drive device U 10 as a bit stream supply unit which reads a bit stream stored on a disc, a display U30 as an image display device which displays a reproduced motion picture, and an operation switch U40 which provides an instruction to start and stop playback and perform the special playback.

Note that the accumulation medium C60 may be, for example, a memory card or the like in addition to an optical disc. The bit stream supply unit C10 may be, for example, a memory card reader in addition to an optical disc drive. The user operation device C40 may be, for example, an input panel or button, a remote control transmitter or the like. The image output unit C30 may be, for example, an analog video output interface of NTSC, PAL or the like, a digital video interface or the like. The image display device C70 may be a liquid crystal display, a PDP, a CRT or the like.

### (Example Application 2 to Electronic Apparatus)

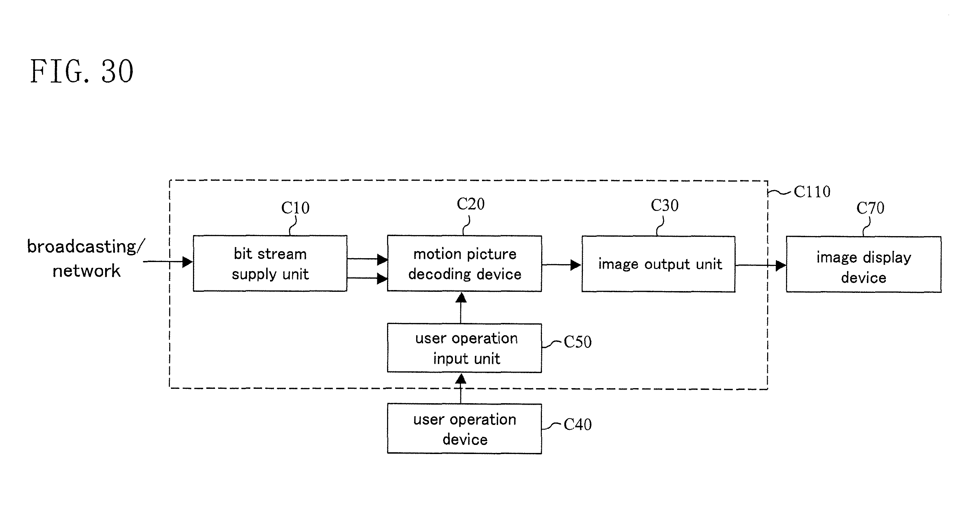

FIG. 30 is a block diagram showing an example configuration of an electronic apparatus having the motion picture decoding device of the present invention. As shown in FIG. 30, the electronic apparatus C110 receives a bit stream from broadcasting or a network instead of an accumulation medium. A bit stream supply unit C10 includes, for example, a network input interface. Examples of the electronic apparatus C110 include a mobile information terminal, a mobile telephone, a set top box or the like, which receives a stream from a network or broadcasting.

Note that, in Example Applications 1 and 2 above, the user operation device C40 and the image display device C70 may be integrated with the electronic apparatus C100, or may be separated from and connected via wire or wirelessly to the electronic apparatus C100.

Note that examples of an electronic apparatus to which the present invention is applicable include, in addition to those described above, various electronic apparatuses, such as a personal computer, an apparatus which accumulates and reproduces a stream using a memory card or an HDD, and the like.

### INDUSTRIAL APPLICABILITY

The present invention can be used in, for example, an integrated circuit having a function of decoding and reproducing a motion picture, an optical disc reproducing apparatus including such an integrated circuit, a personal computer, an apparatus which accumulates a stream (a memory card, an HDD, etc.), and a mobile information terminal, a mobile telephone and a set top box, which receive a stream from a network or broadcasting.

## Claims

1. A motion picture decoding method for decoding an encoded motion picture on each of a plurality of channels and synthesizing and reproducing the motion pictures on the same screen, comprising the steps of:
obtaining structure information of the encoded motion picture on each channel;
determining display targets to be reproduced, the display targets being frames at the same time on the channels, based on the structure information, when a predetermined special playback mode is designated; and
decoding the display targets,
wherein, in the display target determining step, frames at the same time on the channels having an evaluation index larger than or equal to a predetermined threshold are excluded from the display targets, the evaluation index being based on a difference in a required-for-decoding number of frames between each channel, the required-for-decoding number of frames being the number of frames required for decoding and being calculated based on the structure information.

2. The motion picture decoding method of claim 1, wherein
in the obtaining step, image size information of the encoded motion pictures is obtained in addition to the structure information, and
in the display target determining step, as the evaluation index based on the difference in the required-for-decoding number of frames between each channel, a value obtained by correcting the evaluation index based on the image size information is used.

3. The motion picture decoding method of claim 1, wherein
in the obtaining step, encoding standard information of the encoded motion pictures is obtained in addition to the structure information, and
in the display target determining step, as the evaluation index based on the difference in the required-for-decoding number of frames between each channel, a value obtained by correcting the evaluation index based on the encoding standard information is used.

4. The motion picture decoding method of claim 1, wherein
in the obtaining step, the amount of codes of each frame on each channel is obtained in addition to the structure information, and
in the display target determining step, instead of the evaluation index based on the difference in the required-for-decoding number of frames between each channel, an evaluation index based on a difference in a required-for-decoding amount of codes between each channel is used, the required-for-decoding amount of codes being the amount of codes required for decoding and being obtained based on the structure information and the amount of codes of each frame.

5. The motion picture decoding method of claim 4, wherein
in the obtaining step, the amount of codes of each frame is obtained based on pointer information output from a buffer memory for temporarily accumulating the encoded motion pictures for decoding.

6. The motion picture decoding method of claim 1, wherein
in the obtaining step, a period of time required to decode each frame on each channel is obtained in addition to the structure information, and
in the display target determining step, instead of the evaluation index based on the difference in the required-for-decoding number of frames between each channel, an evaluation index based on a difference in a required-for-decoding time period between each channel is used, the required-for-decoding time period being the time period required for decoding and being obtained based on the structure information and the period of time required to decode each frame.

7. The motion picture decoding method of any one of claims 1, 5 and 6, wherein
the display target determining step has a process of canceling display target candidates having the evaluation index larger than or equal to a predetermined threshold, and
for a previously designated priority channel, the cancellation of display target candidates is invalidated when the cancellation of display target candidates occurs a predetermined number of times or more.

8. A motion picture decoding method for decoding an encoded motion picture on each of a plurality of channels and synthesizing and reproducing the motion pictures on the same screen, comprising the steps of:
obtaining structure information of the encoded motion picture on each channel;
determining display targets to be reproduced, the display targets being frames at the same time on the channels, when a predetermined special playback mode is designated;
determining a delayed channel for the display targets based on the structure information, the delayed channel being a channel for which it is predicted that decoding of the corresponding display target will be last completed; and
decoding the display targets, and after the frame on the delayed channel is completely decoded, synthesizing and reproducing the decoded image data on the channels at the same timing,
wherein, in the delayed channel determining step, of frames as the display targets, a frame having a largest required-for-decoding number of frames is obtained, the required-for-decoding number of frames being the number of frames required for decoding and being obtained based on the structure information, and the channel of the frame having the largest required-for-decoding number of frames is determined as the delayed channel.

9. The motion picture decoding method of claim 8, wherein
in the obtaining step, image size information of the encoded motion pictures is obtained in addition to the structure information, and
in the delayed channel determining step, as the required-for-decoding number of frames, a value obtained by correcting the required-for-decoding number of frames based on the image size information is used.

10. The motion picture decoding method of claim 8, wherein
in the obtaining step, encoding standard information of the encoded motion pictures is obtained in addition to the structure information, and
in the delayed channel determining step, as the required-for-decoding number of frames, a value obtained by correcting the required-for-decoding number of frames based on the encoding standard information is used.

11. The motion picture decoding method of claim 8, wherein
in the obtaining step, the amount of codes of each frame on each channel is obtained in addition to the structure information, and
in the delayed channel determining step, instead of the required-for-decoding number of frames, a required-for-decoding amount of codes is used, the required-for-decoding amounts of codes being the amount of codes required for decoding and being obtained based on the structure information and the amount of codes of each frame.

12. The motion picture decoding method of claim 8, wherein
in the obtaining step, a period of time required to decode each frame on each channel is obtained in addition to the structure information, and
in the delayed channel determining step, instead of the required-for-decoding number of frames, a required-for-decoding time period is used, the required-for-decoding time period being the time period required for decoding and being obtained based on the structure information and the period of time required to decode each frame.

13. The motion picture decoding method of any one of claims 8, 11 and 12, wherein
wherein, in the display target determining step, frames at the same time on the channels having an evaluation index larger than or equal to a predetermined threshold are excluded from the display targets, the evaluation index being based on a difference in the required-for-decoding number of frames, the required-for-decoding amount of codes, or the required-for-decoding time period between each channel.

14. The motion picture decoding method of claim 1, wherein
in the display target determining step, instead of the evaluation index based on the difference in the required-for-decoding number of frames between each channel, an evaluation index based on a difference in the number of frames until reaching the current frame in a GOP between each channel is used.

15. The motion picture decoding method of any one of claims 1 to 14, wherein
the predetermined special playback mode is a reverse slow playback mode.

16. A motion picture decoding device for decoding an encoded motion picture on each of a plurality of channels and synthesizing and reproducing the motion pictures on the same screen, comprising:
a decoder configured to decode the encoded motion picture on each channel and obtain structure information of the encoded motion picture on each channel;
a plurality of frame memories configured to store frame image data output from the decoder for the respective channels; and
a controller configured to control the decoder and each of the frame memories and receive the structure information from the decoder,
wherein the controller performs the processes of:
determining display targets to be reproduced, the display targets being frames at the same time on the channels, based on the structure information, when a predetermined special playback mode is designated; and
instructing the decoder to decode the display targets, and
in the display target determining process, frames at the same time on the channels having an evaluation index larger than or equal to a predetermined threshold are excluded from the display targets, the evaluation index being based on a difference in a required-for-decoding number of frames between each channel, the required-for-decoding number of frames being the number of frames required for decoding and being calculated based on the structure information.

17. The motion picture decoding device of claim 16, wherein
the controller receives, from the decoder, image size information of the encoded motion picture in addition to the structure information, and
in the display target determining process, as the evaluation index based on the difference in the required-for-decoding number of frames between each channel, a value obtained by correcting the evaluation index based on the image size information is used.

18. The motion picture decoding device of claim 16, wherein
the controller receives, from the decoder, encoding standard information of the encoded motion pictures in addition to the structure information, and
in the display target determining process, as the evaluation index based on the difference in the required-for-decoding number of frames between each channel, a value obtained by correcting the evaluation index based on the encoding standard information is used.

19. The motion picture decoding device of claim 16, comprising:
a buffer memory configured to temporarily store the encoded motion pictures for decoding,
wherein the controller receives pointer information output from the buffer memory, and obtains the amount of codes of each frame on each channel based on the pointer information, and
in the display target determining process, instead of the evaluation index based on the difference in the required-for-decoding number of frames between each channel, an evaluation index based on a difference in a required-for-decoding amount of codes between each channel is used, the required-for-decoding amount of codes being the amount of codes required for decoding and being obtained based on the structure information and the amount of codes of each frame.

20. The motion picture decoding device of claim 16, comprising:
a time measuring unit configured to output time information,
wherein the controller receives, from the decoder, decoding timing information in addition to the structure information, and obtains a period of time required to decode each frame on each channel based on the decoding timing information and the time information output from the time measuring unit, and
in the display target determining process, instead of the evaluation index based on the difference in the required-for-decoding number of frames between each channel, an evaluation index based on a difference in a required-for-decoding time period between each channel is used, the required-for-decoding time period being the time period required for decoding and being obtained based on the structure information and the period of time required to decode each frame.

21. The motion picture decoding device of any one of claims 16, 19 and 20, wherein
the controller has, in the display target determining process, the process of:
canceling a display target candidate having the evaluation index larger than or equal to a predetermined threshold, and
for a previously designated priority channel, the cancellation of display target candidates is invalidated when the cancellation of display target candidates occurs a predetermined number of times or more.

22. A motion picture decoding device for decoding an encoded motion picture on each of a plurality of channels and synthesizing and reproducing the motion pictures on the same screen, comprising:
a decoder configured to decode the encoded motion picture on each channel and obtaining structure information of the encoded motion picture on each channel;
a plurality of frame memories configured to store frame image data output from the decoder for the respective channels; and
a controller configured to control the decoder and each of the frame memories and receive the structure information from the decoder,
wherein the controller performs the processes of:
determining display targets to be reproduced, the display targets being frames at the same time on the channels, when a predetermined special playback mode is designated;
determining a delayed channel for the display targets based on the structure information, the delayed channel being a channel for which it is predicted that decoding will be the last; and instructing the decoder to decode the display targets, and after the frame on the delayed channel is completely decoded, instructing the frame memories to synthesize and reproduce the decoded image data on the respective channels at the same timing,
wherein, in the delayed channel determining process, of frames as the display targets, a frame having a largest required-for-decoding number of frames is obtained, the required-for-decoding number of frames being the number of frames required for decoding and being obtained based on the structure information, and the channel of the frame having the largest required-for-decoding number of frames is determined as the delayed channel.

23. The motion picture decoding device of claim 22, wherein
the controller receives, from the decoder, image size information of the encoded motion pictures in addition to the structure information, and
in the delayed channel determining process, as the required-for-decoding number of frames, a value obtained by correcting the required-for-decoding number of frames based on the image size information is used.

24. The motion picture decoding device of claim 22, wherein
the controller receives, from the decoder, encoding standard information of the encoded motion pictures in addition to the structure information, and
in the delayed channel determining process, as the required-for-decoding number of frames, a value obtained by correcting the required-for-decoding number of frames based on the encoding standard information is used.

25. The motion picture decoding device of claim 22, comprising:
a buffer memory configured to temporarily store the encoded motion pictures for decoding;
wherein the controller receives pointer information output from the buffer memory, and obtains the amount of codes of each frame on each channel based on the pointer information, and
in the display target determining process, instead of the required-for-decoding number of frames, a required-for-decoding amount of codes is used, the required-for-decoding amount of codes being the amount of codes required for decoding and being obtained based on the structure information and the amount of codes of each frame.

26. The motion picture decoding device of claim 22, comprising:
a time measuring unit configured to output time information,
wherein the controller receives, from the decoder, decoding timing information in addition to the structure information, and obtains a period of time required to decode each frame on each channel based on the decoding timing information and the time information output from the time measuring unit, and
in the display target determining process, instead of the required-for-decoding number of frames, a required-for-decoding time period is used, the required-for-decoding time period being the time period required for decoding and being obtained based on the structure information and the period of time required to decode each frame.

27. The motion picture decoding device of any one of claims 22, 25 and 26, wherein
in the display target determining process, the controller excludes frames at the same time on the channels having an evaluation index larger than or equal to a predetermined threshold from the display targets, the evaluation index being based on a difference in the required-for-decoding number of frames, the required-for-decoding amount of codes, or the required-for-decoding time period between each channel.

28. The motion picture decoding device of claim 16, wherein
in the display target determining process, the controller uses, instead of the evaluation index based on the difference in the required-for-decoding number of frames between each channel, an evaluation index based on a difference in the number of frames until reaching the current frame in a GOP between each channel.

29. The motion picture decoding device of any one of claims 16 to 28, wherein
the predetermined special playback mode is a reverse slow playback mode.

30. The motion picture decoding device of any one of claims 16 to 29, comprising:
a bit stream supply unit configured to supply the encoded motion picture on each channel to the motion picture decoding device; and
an image output unit configured to output a reproduced image output from the motion picture decoding device, for displaying.
